# EUROPEAN PATENT APPLICATION

(11) **EP 3 632 540 A1**
(43) Date of publication of application: **08.04.2020**
(21) Application number: 18808950.2
(22) Date of filing: 31.05.2018
(51) Int. Cl.: B01J 29/035, B01J 29/69, B01J 29/78, B01J 35/10, C01B 37/02, C07B 61/00

(54) **HYDROGENOLYSIS CATALYST STRUCTURE, HYDROGENOLYSIS DEVICE PROVIDED WITH SAID HYDROGENOLYSIS CATALYST STRUCTURE, AND PRODUCTION METHOD OF HYDROGENOLYSIS CATALYST STRUCTURE**

(30) Priority: 31.05.2017 JP 2017108612
(71) Applicant: Furukawa Electric Co., Ltd., Chiyoda-ku Tokyo 100-8322 (JP)
(72) Inventor: MASUDA Takao, Hokkaido 0600808 (JP); NAKASAKA Yuta, Hokkaido 0600808 (JP); YOSHIKAWA Takuya, Hokkaido 0600808 (JP); KATO Sadahiro, Tokyo 100-8322 (JP); FUKUSHIMA Masayuki, Tokyo 100-8322 (JP); TAKAHASHI Hiroko, Tokyo 100-8322 (JP); BANBA Yuichiro, Tokyo 100-8322 (JP); SEKINE Kaori, Tokyo 100-8322 (JP)
(74) Representative: Gunzelmann, Rainer
(86) International application number: PCT/JP2018/021093
(87) International publication number: WO 2018/221705

(57) **Abstract**

An object of the present invention is to provide: a structured catalyst for hydrocracking that suppresses the decline in catalytic activity and allows efficient hydrocracking treatment in the step of upgrading of the GTL process; and a hydrocracking device including the structured catalyst for hydrocracking. The structured catalyst for hydrocracking includes: a support of a porous framework composed of a zeolite-type compound; and a catalytic substance present in the support, the support having channels connecting with each other, the catalytic substance being made of at least one type selected from the group consisting of metal oxide nanoparticles and metal nanoparticles and being present at least in the channels of the support.

## Description

### Technical Field

The present invention relates to a structured catalyst for hydrocracking, in particular a structured catalyst for hydrocracking used in the upgrading process of gas-to-liquid (GTL) process, a hydrocracking device including the structured catalyst for hydrocracking, and a method for producing a structured catalyst for hydrocracking.

### Background Art

The process of producing a liquid fuel from a natural gas is commonly referred to as a GTL process. The GTL process is specifically composed of a step of synthetic gas producing, a step of Fischer-Tropsch synthesis (hereinafter referred to as "step of FT synthesis"), and a step of upgrading. The step of synthetic gas producing converts natural gas to a synthetic gas containing carbon monoxide and hydrogen. Additionally, the step of FT synthesis produces a synthetic oil containing linear hydrocarbons by subjecting the synthetic gas obtained by the step of synthetic gas producing to the Fischer-Tropsch synthesis reaction. Furthermore, the step of upgrading produces a liquid fuel such as naphtha, diesel, and kerosene by subjecting the synthetic oil obtained in the step of FT synthesis to hydrocracking treatment. As described in p. 22 of Non-patent Document 1, the hydrocracking treatment in the step of upgrading has problems that the energy consumption of the process is large and the equipment is expensive. Therefore, in order to progress the reaction more efficiently, the development of catalysts used in hydrocracking treatment has been vigorously conducted. As a catalyst used in the hydrocracking treatment, for example, page 9 of Non-Patent Document 2 discloses a Pt-based catalyst.

### Citation List

### Non-Patent Document

Non-Patent Document 1: Technical Research Institute, Inc., "Development of Coal Liquefaction Technology: Survey of Trends around Technology Such As Upgrading", November 2002, p. 1 to 87 Non-Patent Document 2: Analysis 2013. 1 Vol. 47 No. 1 p. 1-22

### Summary of Invention

### Technical Problem

However, no useful catalyst has yet been found in terms of catalytic activity for catalysts used in hydrocracking treatment on synthetic oil obtained in the step of FT synthesis. Therefore, further improvement in catalyst efficiency is desired.

An object of the present invention is to provide a structured catalyst for hydrocracking, a hydrocracking device including the structured catalyst for hydrocracking, and a method for producing a structured catalyst for hydrocracking, the structured catalyst suppressing the decline in catalytic activity and allowing efficient hydrocracking treatment in the step of upgrading of the GTL process.

### Solution to Problem

As a result of diligent research to achieve the object described above, the present inventors have found that the structured catalyst for hydrocracking that can suppress the decline in catalytic activity and allow efficient hydrocracking treatment in the step of upgrading of a GTL process can be obtained by including:
a support of a porous framework composed of a zeolite-type compound; and
catalytic substance present in the support,
the support having channels connecting with each other, and
the catalytic substance being made of at least one type selected from the group consisting of metal oxide nanoparticles and metal nanoparticles and being present at least in the channels of the support;
and thus completed the present invention based on such finding.

In other words, the summary configurations of the present invention are as follows.
[1] A structured catalyst for hydrocracking, including:
   a support of a porous framework composed of a zeolite-type compound; and
   a catalytic substance present in the support,
   the support having channels connecting with each other, and
   the catalytic substance being made of at least one type selected from the group consisting of metal oxide nanoparticles and metal nanoparticles and being present at least in the channels of the support.
[2] The structured catalyst for hydrocracking according to [1], in which each of the channels has an enlarged pore portion, and the catalytic substance is present at least in the enlarged pore portion of the channels.
[3] The structured catalyst for hydrodesulfurization according to [2], wherein the enlarged pore portion communicates with a plurality of pores constituting any one of a one-dimensional pore, a two-dimensional pore, and a three-dimensional pore.
[4] The structured catalyst for hydrocracking according to any one of [1] to [3], in which the metal oxide nanoparticles are nanoparticles composed of at least one type of metal oxide selected from the group consisting of cobalt oxide, nickel oxide, molybdenum oxide, tungsten oxide, and iron oxide.
[5] The structured catalyst for hydrocracking according to any one of [1] to [3], wherein the metal nanoparticles are nanoparticles composed of at least one type of metal selected from the group consisting of platinum, palladium, rhodium, ruthenium, iridium, osmium, cobalt, nickel, molybdenum, tungsten, and iron.
[6] The structured catalyst for hydrocracking according to any one of [1] to [5], in which the catalytic substance includes at least metal oxide nanoparticles, and an average particle size of the metal oxide nanoparticles is from 0.1 nm to 50 nm.
[7] The structured catalyst for hydrodesulfurization according to [6], in which the average particle size of the metal oxide nanoparticles is from 0.45 nm to 14.0 nm.
[8] The structured catalyst for hydrocracking according to any one of [1] to [7], in which the catalytic substance includes at least metal oxide nanoparticles, and a ratio of the average particle size of the metal oxide nanoparticles to an average inner diameter of the channels is from 0.06 to 500.
[9] The structured catalyst for hydrocracking according to [8], in which the ratio of the average particle size of the metal oxide nanoparticles to the average inner diameter of the channels is from 0.1 to 45.
[10] The structured catalyst for hydrocracking according to [8] or [9], in which the ratio of the average particle size of the metal oxide nanoparticles to the average inner diameter of the channels is from 1.7 to 4.5.
[11] The structured catalyst for hydrodesulfurization according to any one of [6] to [9], in which a metal element (M) of the metal oxide nanoparticles is contained in an amount of from 0.5 to 2.5 mass% relative to the structured catalyst.
[12] The structured catalyst for hydrocracking according to any one of [1] to [11], in which the catalytic substance includes at least metal nanoparticles, and the average particle size of the metal nanoparticles is from 0.08 nm to 30 nm.
[13] The structured catalyst for hydrodesulfurization according to [12], in which the average particle size of the metal nanoparticles is from 0.35 nm to 11.0 nm.
[14] The structured catalyst for hydrocracking according to any one of [1] to [13], in which the catalytic substance includes at least metal nanoparticles, and the ratio of the average particle size of the metal nanoparticles to the average inner diameter of the channels is from 0.05 to 300.
[15] The structured catalyst for hydrocracking according to [14], in which the ratio of the average particle size of the metal nanoparticles to the average inner diameter of the channels is from 0.1 to 30.
[16] The structured catalyst for hydrocracking according to [14] or [15], in which the ratio of the average particle size of the metal nanoparticles to the average inner diameter of the channels is from 1.4 to 3.6.
[17] The structured catalyst for hydrodesulfurization according to any one of [12] to [16], in which a metal element (M) of the metal nanoparticles is contained in an amount of from 0.5 to 2.5 mass% relative to the structured catalyst.
[18] The structured catalyst for hydrocracking according to any one of [2] to [17], in which an average particle size of the catalytic substance is greater than an average inner diameter of the channels and is less than or equal to an inner diameter of the enlarged pore portion.
[19] The structured catalyst for hydrocracking according to any one of [1] to [18],
   in which each of the channels has any one of the one-dimensional pore, the two-dimensional pore, and the three-dimensional pore defined by a framework of the zeolite-type compound and the enlarged pore portion that is different from any one of the one-dimensional pore, the two-dimensional pore, and the three-dimensional pore,
   the average inner diameter of the channels is from 0.1 nm to 1.5 nm, and
   the inner diameter of the enlarged pore portion is from 0.5 nm to 50 nm.
[20] The structured catalyst for hydrocracking according to any one of [1] to [19], in which the catalytic substance is further held on an outer surface of the support.
[21] The structured catalyst for hydrocracking according to [20], in which a content of the catalytic substance present in the support is greater than a content of the catalytic substance held on the outer surface of the support.
[22] The structured catalyst for hydrocracking according to any one of [1] to [21], in which the zeolite-type compound is a silicate compound.
[23] A hydrocracking device including the structured catalyst for hydrocracking described in any one of [1] to [22].
[24] A method for producing a structured catalyst for hydrodesulfurization, including:
   a step of calcination of calcinating a precursor material (B) obtained by impregnating a precursor material (A), for obtaining a support of a porous framework composed of zeolite-type compound, with a metal-containing solution; and
   a step of hydrothermal treatment of hydrothermal-treating a precursor material (C) obtained by sintering the precursor material (B).
[25] The method for producing a structured catalyst for hydrodesulfurization according to [24], including a step of reduction treatment of the hydrothermal-treated precursor material (C).
[26] The method for producing a structured catalyst for hydrodesulfurization according to [24] or [25], in which from 50 to 500 mass% of a non-ionic surfactant is added to the precursor material (A) before the step of calcination.
[27] The method for producing a structured catalyst for hydrodesulfurization according to any one of [24] to [26], in which the precursor material (A) is impregnated with the metal-containing solution by adding the metal-containing solution to the precursor material (A) in multiple portions before the step of calcination.
[28] The method for producing a structured catalyst for hydrodesulfurization according to any one of [24] to [27], in which in impregnating the precursor material (A) with the metal-containing solution before the step of calcination, an added amount of the metal-containing solution added to the precursor material (A), converted into a ratio of silicon (Si) constituting the precursor material (A) to a metal element (M) included in the metal-containing solution added to the precursor material (A) (a ratio of number of atoms Si/M), is adjusted to from 10 to 1000.
[29] The method for producing a structured catalyst for hydrodesulfurization according to [24] or [25], in which in the step of hydrothermal treatment, the precursor material (C) and a structure directing agent are mixed.
[30] The method for producing a structured catalyst for hydrodesulfurization according to [24] or [25], in which the step of hydrothermal treatment is performed in basic condition.

### Advantageous Effects of Invention

According to the present invention, provided are a structured catalyst for hydrocracking that suppresses the decline in catalytic activity and allows efficient hydrocracking treatment in the step of upgrading of the GTL process; and a hydrocracking device including the structured catalyst for hydrocracking.

### Brief Description of Drawings

FIG. 1 is a diagram schematically illustrating a structured catalyst for hydrocracking according to an embodiment of the present invention so that the inner structure can be understood. FIG. 1A is a perspective view (partially shown in cross-section), and FIG. 1B is a partially enlarged cross-sectional view.
FIG. 2 is a partial enlarged cross-sectional view for explaining an example of the function of the structured catalyst for hydrocracking of FIG. 1. FIG. 2A is a diagram illustrating sieving capability, and FIG. 2B is a diagram explaining catalytic function.
FIG. 3 is a flowchart illustrating an example of a method for producing the structured catalyst for hydrocracking of FIG. 1.
FIG. 4 is a schematic view illustrating a modified example of the structured catalyst for hydrocracking in FIG. 1.

### Description of Embodiments

Hereinafter, embodiments of the present invention will be described in detail with reference to drawings.

### Configuration of Structured Catalyst

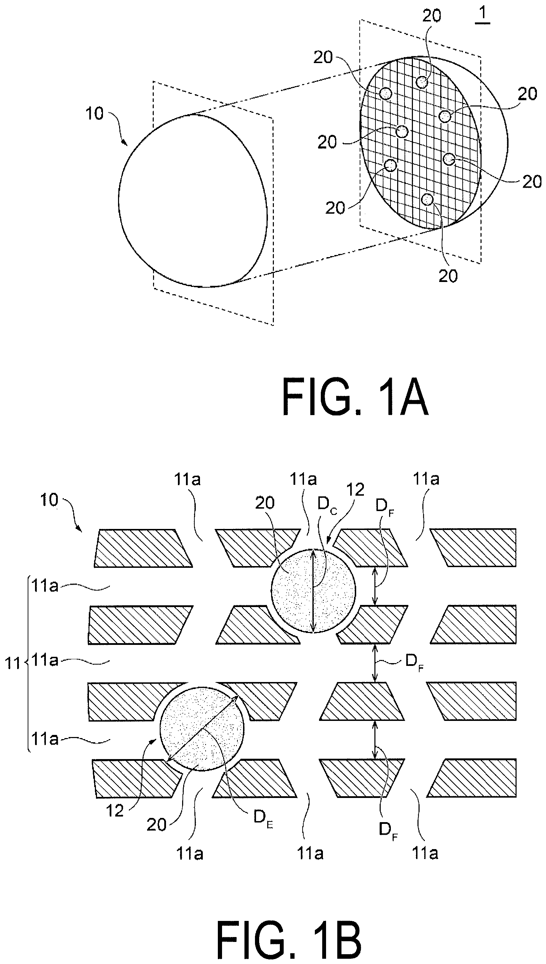

FIG. 1 is a diagram schematically illustrating a configuration of a structured catalyst for hydrocracking (hereinafter referred to as "structured catalyst") according to an embodiment of the present invention. In FIG. 1, A is a perspective view (partially shown in cross-section), and B is a partially enlarged cross-sectional view. Note that the structured catalyst in FIG. 1 is an example of the structured catalyst, and the shape, dimension, and the like of each of the configurations according to the present invention are not limited to those illustrated in FIG. 1.

As illustrated in FIG. 1A, a structured catalyst 1 includes a support 10 of a porous framework composed of a zeolite-type compound and at least one catalytic substance 20 present in the support 10.

In the structured catalyst 1, a plurality of the catalytic substances 20, 20, ... are embedded in the porous framework of the support 10. The catalytic substance 20 is at least one type selected from the group consisting of metal oxide nanoparticles and metal nanoparticles. The metal oxide nanoparticles and metal nanoparticles are described in detail below.

The support 10 has a porous framework, and as illustrated in FIG. 1B, a plurality of pores 11a, 11a, ... are preferably formed so as to have channels 11 connecting with each other. Here, the catalytic substance 20 is present at least in the channels 11 of the support 10 and is preferably held at least in the channels 11 of the support 10.

With such a configuration, movement of the catalytic substance 20 within the support 10 is restricted, and aggregation between the catalytic substances 20 and 20 is effectively prevented. As a result, the decrease in effective surface area of the catalytic substance 20 can be effectively suppressed, and the function of the catalytic substance 20 lasts for a long period of time. In other words, according to the structured catalyst 1, decline in function due to aggregation of the catalytic substance 20 can be suppressed, and the life of the structured catalyst 1 can be extended. In addition, due to the long life time of the structured catalyst 1, the replacement frequency of the structured catalyst 1 can be reduced, and the amount of waste of the used structured catalyst 1 can be significantly reduced and thereby can save resources.

Typically, when the structured catalyst is used in a fluid, it can be subjected to external forces from the fluid. In this case, if the catalytic substance is only held in the state of attachment to the outer surface of the support 10, there is a problem of easy detachment from the outer surface of the support 10 due to the influence of external force from the fluid. In contrast, in the structured catalyst 1, the catalytic substance 20 is present at least in the channels 11 of the support 10, and therefore, even if subjected to an external force caused by a fluid, the catalytic substance 20 is less likely to detach from the support 10. That is, when the structured catalyst 1 is in the fluid, the fluid flows into the channels 11 from the pores 11a of the support 10, so the speed of the fluid flowing through the channels 11 is slower than the speed of the fluid flowing on the outer surface of the support 10 due to the flow path resistance (frictional force). Due to the influence of such flow path resistance, the pressure experienced by the catalytic substance 20 present in the channels 11 from the fluid is lower than the pressure at which the catalytic substance 20 is received from the fluid outside of the support 10. As a result, detachment of the catalytic substance 20 present in the support 11 can be effectively suppressed, and the function of the catalytic substance 20 can be stably maintained over a long period of time. Note that the flow path resistance as described above is thought to be larger as the channels 11 of the support 10 have a plurality of bends and branches and as the interior of the support 10 becomes a more complex three-dimensional structure.

Preferably, the channels 11 have any one of a one-dimensional pore, a two-dimensional pore, and a three-dimensional pore defined by a framework of the zeolite-type compound; and the enlarged pore portion 12 which is different from any one of the one-dimensional pore, the two-dimensional pore, and the three-dimensional pore. In this case, the catalytic substance 20 is preferably present at least in the enlarged pore portion 12 and is more preferably embedded at least in the enlarged pore portion 12. Here, the "one-dimensional pore" refers to a tunnel-type or cage-type pore forming a one-dimensional channel; or a plurality of tunnel-type or cage-type pores (a plurality of one-dimensional channels) forming a plurality of one-dimensional channels. Also, the "two-dimensional pore" refers to a two-dimensional channel in which a plurality of one-dimensional channels is connected two-dimensionally. The "three-dimensional pore" refers to a three-dimensional channel in which a plurality of one-dimensional channels are connected three-dimensionally.

As a result, the movement of the catalytic substance 20 within the support 10 is further restricted, and it is possible to further effectively prevent detachment of the catalytic substance 20 and aggregation between the catalytic substances 20, 20. Embedding refers to a state in which the catalytic substance 20 is included in the support 10. At this time, the catalytic substance 20 and the support 10 need not necessarily be in direct contact with each other, but the catalytic substance 20 may be indirectly held by the support 10 with other substances (e.g., a surfactant, etc.) interposed between the catalytic substance 20 and the support 10.

Although FIG. 1B illustrates the case in which the catalytic substance 20 is embedded in the enlarged pore portion 12, the catalytic substance 20 is not limited to this configuration only, and the catalytic substance 20 may be held in the channels 11 with a portion thereof protruding outward of the enlarged pore portion 12. Furthermore, the catalytic substance 20 may be partially embedded in a portion of the channels 11 other than the enlarged pore portion 12 (for example, an inner wall portion of the channels 11) or may be held by fixing or the like, for example.

Additionally, the enlarged pore portion 12 preferably communicates with the plurality of pores 11a, 11a constituting any one of the one-dimensional pore, the two-dimensional pore, and the three-dimensional pore. As a result, a separate channel different from the one-dimensional pore, the two-dimensional pore, or the three-dimensional pore is provided in the support 10, so the function of the catalytic substance 20 can be further exhibited.

Additionally, the channels 11 are formed three-dimensionally by including a branch portion or a merging portion within the support 10, and the enlarged pore portion 12 is preferably provided in the branch portion or the merging portion of the channels 11.

An average inner diameter D_{F} of the channels 11 formed in the support 10 is calculated from the average value of the short diameter and the long diameter of the pore 11a constituting any one of the one-dimensional pore, the two-dimensional pore, and the three-dimensional pore. For example, it is from 0.1 nm to 1.5 nm and preferably from 0.5 nm to 0.8 nm. An inner diameter D_{E} of the enlarged pore portion 12 is from 0.5 nm to 50 nm, for example. The inner diameter D_{E} is preferably from 1.1 nm to 40 nm and more preferably from 1.1 nm to 3.3 nm. For example, the inner diameter D_{E} of the enlarged pore portion 12 depends on the pore diameter of a precursor material (A) described below and an average particle size D_{C} of the catalytic substance 20 to be embedded. The inner diameter D_{E} of the enlarged pore portion 12 is sized so that the enlarged pore portion 12 is able to embed the catalytic substance 20.

The support 10 is composed of a zeolite-type compound. Examples of zeolite-type compounds include zeolite analog compounds such as zeolites (alminosilicate salts), cation exchanged zeolites, silicate compounds such as silicalite, alminoborate salts, alminoarsenate salts, and germanate salts; and phosphate-based zeolite analog materials such as molybdenum phosphate. Among these, the zeolite-type compound is preferably a silicate compound.

The framework of the zeolite-type compound is selected from FAU type (Y type or X type), MTW type, MFI type (ZSM-5), FER type (ferrierite), LTA type (A type), MWW type (MCM-22), MOR type (mordenite), LTL type (L type), and BEA type (beta type). Preferably, it is MFI type and more preferably ZSM-5. A plurality of pores having a pore diameter corresponding to each framework is formed in the zeolite-type compound. For example, the maximum pore diameter of MFI type is 0.636 nm (6.36 Å), and the average pore diameter is 0.560 nm (5.60 Å).

In the following, the catalytic substance 20 will be described in detail.

The catalytic substance 20 is at least one type selected from the group consisting of metal oxide nanoparticles and metal nanoparticles (hereinafter may be simply referred to as "nanoparticles"). The catalytic substance 20 may be composed of metal oxide nanoparticles or metal nanoparticles or may be composed as composite particles including both metal oxide nanoparticles and metal nanoparticles.

When the catalytic substance 20 is made of the above nanoparticles, the nanoparticles may be present in the channels 11 in the state of primary particles or present in the channels 11 in the state of secondary particles formed by aggregation of primary particles. In both cases, the average particle size D_{C} of the nanoparticles is preferably greater than the average inner diameter D_{F} of the channels 11 and is less than or equal to the inner diameter D_{E} of the enlarged pore portion 12 (D_{F} < D_{C} ≤ D_{E}). Such nanoparticles are suitably embedded in the enlarged pore portion 12 within the channels 11, and the movement of the nanoparticles within the support 10 is restricted. Thus, even if the nanoparticles are subjected to an external force from a fluid, movement of the nanoparticles within the support 10 is suppressed, and it is possible to effectively prevent contact between the nanoparticles embedded in the enlarged pore portions 12, 12, ... dispersed in the channels 11 of the support 10.

When the catalytic substance 20 is made of metal oxide nanoparticles, the average particle size D_{C} of the metal oxide nanoparticles is preferably from 0.1 nm to 50 nm, more preferably 0.1 nm or more and less than 30 nm, further preferably from 0.45 nm to 14.0 nm, and particularly preferably from 1.0 nm to 3.3 nm for primary particles and secondary particles. Furthermore, the ratio (D_{C}/D_{F}) of the average particle size D_{C} of the metal oxide nanoparticles 20 to the average inner diameter D_{F} of the channels 11 is preferably from 0.06 to 500, more preferably from 0.1 to 45, even more preferably from 1.1 to 45, and particularly preferably from 1.7 to 4.5.

When the catalytic substance 20 is made of metal oxide nanoparticles, a metal element (M) of the metal oxide nanoparticles is preferably contained in from 0.5 to 2.5 mass% relative to the structured catalyst 1 and more preferably from 0.5 to 1.5 mass% relative to the structured catalyst 1. For example, when the metal element (M) is Co, the content of the Co element (mass%) is expressed as [(mass of Co element)/(mass of all elements in the structured catalyst 1)] × 100.

The metal oxide nanoparticles only need to be constituted by a metal oxide. For example, the metal oxide nanoparticles may be constituted by a single metal oxide or may be constituted by a mixture of two or more types of metal oxides. In the present specification, the "metal oxide" constituting the metal oxide nanoparticles (as a raw material) refers to an oxide containing one type of metal element (M) and a composite oxide containing two or more types of metal elements (M), and the term is a generic term for an oxide containing one or more metal elements (M).

Examples of the metal oxide include cobalt oxide (CoOₓ), nickel oxide (NiOₓ), iron oxide (FeOₓ), copper oxide (CuOₓ), zirconium oxide (ZrOₓ), cerium oxide (CeOₓ), aluminum oxide (AlOₓ), niobium oxide (NbOₓ), titanium oxide (TiOₓ), bismuth oxide (BiOₓ), molybdenum oxide (MoOₓ), vanadium oxide (VOₓ), chromium oxide (CrOₓ). It is preferable to use at least one of them be used as a main component. In particular, the metal oxide nanoparticles are preferably nanoparticles composed of at least one type of metal oxide selected from the group consisting of cobalt oxide, nickel oxide, iron oxide, and copper oxide.

The metal oxide nanoparticles are preferably nanoparticles composed of at least one type of metal oxide selected from the group consisting of cobalt, nickel, molybdenum, tungsten, and iron; and most preferably nickel, cobalt, molybdenum, or tungsten. When the metal oxide nanoparticles include a metal oxide constituted by two or more types of the metal species, the metal oxide can be referred to as a composite metal oxide.

In addition, when the catalytic substance 20 is made of metal nanoparticles, the average particle size D_{C} of the metal nanoparticles is preferably from 0.08 nm to 30 nm, more preferably 0.08 nm or more and less than 25 nm, and further preferably from 0.35 nm to 11.0 nm, and particularly preferably from 0.8 nm to 2.7 nm for primary particles and second particles. Furthermore, the ratio (D_{C}/D_{F}) of the average particle size D_{C} of the metal nanoparticles to the average inner diameter D_{F} of the channels 11 is preferably from 0.05 to 300, more preferably from 0.1 to 30, even more preferably from 1.1 to 30, and particularly preferably from 1.4 to 3.6.

When the catalytic substance 20 is made of metal nanoparticles, the metal element (M) of the metal nanoparticles is preferably contained in from 0.5 to 2.5 mass% relative to the structured catalyst 1 and more preferably from 0.5 to 1.5 mass% relative to the structured catalyst 1. For example, when the metal element (M) is Co, the content of the Co element (mass%) is expressed as [(mass of Co element)/(mass of all elements in the structured catalyst 1)] × 100.

The metal nanoparticles only need to be constituted by a metal that is not oxidized and may be constituted by a single metal or a mixture of two or more types of metals, for example. Note that in the present specification, the "metal" constituting the metal nanoparticles (as the raw material) refers to an elemental metal containing one type of metal element (M) and a metal alloy containing two or more types of metal elements (M), and the term is a generic term for a metal containing one or more metal elements.

Examples of the metal include noble metals such as platinum (Pt), palladium (Pd), ruthenium (Ru), rhodium (Rh), ruthenium (Ru), iridium (Ir), and osmium (Os), nickel (Ni), cobalt (Co), molybdenum (Mo), tungsten (W), iron (Fe), chromium (Cr), cerium (Ce), copper (Cu), magnesium (Mg), and aluminum (Al). Preferably, any one or more of the above metals is included as a major component. In particular, the metal nanoparticles are preferably nanoparticles composed of at least one type of metal selected from the group consisting of cobalt, nickel, iron, and copper.

The metal nanoparticles are preferably composed of at least one metal selected from the group consisting of platinum, palladium, rhodium, ruthenium, iridium, osmium, cobalt, nickel, molybdenum, tungsten, and iron; and most preferably composed of at least one metal selected from the group consisting of platinum, palladium, nickel, cobalt, nickel, molybdenum, and tungsten.

Furthermore, the ratio of silicon (Si) constituting the support 10 to the metal element (M) constituting the nanoparticles (the ratio of number of atoms Si/M) is preferably from 10 to 1000 and more preferably from 50 to 200. In a case where the ratio is greater than 1000, the activity is low, and the action as the catalytic substance may not be sufficiently obtained. On the other hand, in a case where the ratio is smaller than 10, the proportion of the nanoparticles becomes too large, and the strength of the support 10 tends to decrease. Note that the nanoparticles herein refer to nanoparticles held or supported in the support 10 and do not include nanoparticles adhered to the outer surface of the support 10.

### Function of Structured Catalyst

As described above, the structured catalyst 1 includes the support 10 of a porous framework and the at least one catalytic substance 20 present in the support 10. The structured catalyst 1 exhibits a function according to the catalytic substance 20 upon contact of the catalytic substance 20 present in the support 10 with a fluid. Specifically, the fluid in contact with an outer surface 10a of the structured catalyst 1 flows into the support 10 through the pore 11a formed in the outer surface 10a and guided into the channels 11, moves through the channels 11, and exits to the exterior of the structured catalyst 1 through the other pore 11a. In the pathway through which the fluid travels through the channels 11, the contact with the catalytic substance 20 present in the channels 11 results in a reaction (e.g., catalytic reaction) according to the function of the catalytic substance 20. In addition, the structured catalyst 1 has molecular sieving capability due to the porous framework of the support.

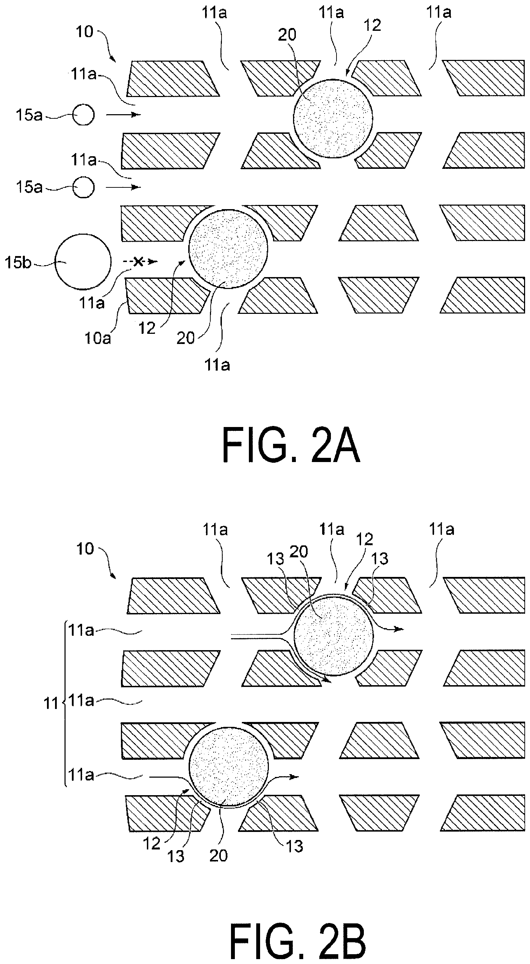

First, the molecular sieving capability of the structured catalyst 1 is described using FIG. 2A in which the fluid is a synthetic oil obtained by the step of FT synthesis in the GTL process. The "synthetic oil obtained in the step of FT synthesis" refers to a synthetic oil produced by converting natural gas to a synthetic gas containing carbon monoxide and hydrogen in the step of synthetic gas producing in the GTL process and then subjecting the synthetic gas to a Fischer-Tropsch synthesis reaction. Specifically, the synthetic oil obtained in the step of FT synthesis includes linear hydrocarbons having from 5 to 100 carbons. As illustrated in FIG. 2A, a compound 15a (e.g., a linear carbon hydrogen) constituted by molecules having a size that is less than or equal to the pore diameter of the pore 11a, in other words, less than or equal to the inner diameter of the channels 11, can flow into the support 10. On the other hand, a compound 15b composed of molecules having a size exceeding the pore diameter of the pore 11a (for example, an aromatic compound substituted by a plurality of functional groups) cannot flow into the support 10. In this way, when the fluid contains a plurality of types of compounds, the reaction of compounds that cannot flow into the support 10 is restricted, while a compound capable of flowing into the support 10 is allowed to react.

Of the compounds produced in the support 10 by the reaction, only compounds composed of molecules having a size less than or equal to the pore diameter of the pore 11a can exit through the pore 11a to the exterior of the support 10 and are obtained as reaction products. On the other hand, a compound that cannot exit to the exterior of the support 10 from the pore 11a can be released to the exterior of the support 10 after being converted into a compound composed of molecules sized to be able to exit to the exterior of the support 10. In this way, a specified reaction product can be selectively obtained by using the structured catalyst 1.

In the structured catalyst 1, as illustrated in FIG. 2B, the catalytic substance 20 is preferably embedded in the enlarged pore portion 12 of the channels 11. When the catalytic substance 20 is made of metal oxide nanoparticles, if the average particle size D_{C} of the metal oxide nanoparticles is larger than the average inner diameter D_{F} of the channels 11 and smaller than the inner diameter D_{E} of the enlarged pore portion 12(D_{F} < D_{C} < D_{E}), a small channel 13 is formed between the metal oxide nanoparticles and the enlarged pore portion 12. Thus, as indicated by the arrow in FIG. 2B, the fluid that have flown into the small channel 13 comes into contact with the metal oxide nanoparticles. Because each metal oxide nanoparticle is embedded in the enlarged pore portion 12, movement within the support 10 is restricted. As a result, aggregation between the metal oxide nanoparticles in the support 10 is prevented. As a result, a large contact area between the metal oxide nanoparticles and the fluid can be stably maintained.

In the present embodiment, when the linear hydrocarbon that has flown into the support 10 comes into contact with the catalytic substance 20, the carbon chain is cut by a hydrocracking reaction. The use of the structured catalyst 1 allows decomposition of the synthetic oil obtained in the step of FTsynthesis.

### Method for Producing Structured Catalyst

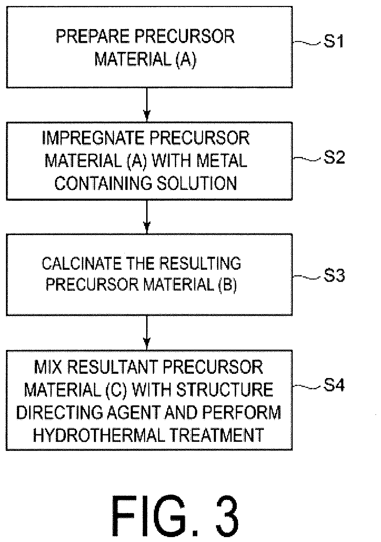

FIG. 3 is a flowchart illustrating a method for producing the structured catalyst 1 of FIG. 1 An example of the method for producing a structured catalyst will be described below, in which the catalytic substance present in a support is made of metal oxide nanoparticles.

### Step S1: Step of Preparation

As illustrated in FIG. 3, firstly, the precursor material (A) for obtaining a support of a porous framework composed of a zeolite-type compound is prepared. The precursor material (A) is preferably a regular mesopore material and can be appropriately selected according to the type (composition) of the zeolite-type compound constituting the support of the structured catalyst.

Here, when the zeolite-type compound constituting the support of the structured catalyst is a silicate compound, the regular mesopore material is preferably a compound including a Si-O skeleton in which pores having a pore diameter of from 1 to 50 nm are uniformly sized and regularly developed one-dimensionally, two-dimensionally, or three-dimensionally. While such a regular mesopore material is obtained as a variety of synthetic materials depending on the synthetic conditions. Specific examples of the synthetic material include SBA-1, SBA-15, SBA-16, KIT-6, FSM-16, and MCM-41. Among them, MCM-41 is preferred. Note that the pore diameter of SBA-1 is from 10 to 30 nm, the pore diameter of SBA-15 is from 6 to 10 nm, the pore diameter of SBA-16 is 6 nm, the pore diameter of KIT-6 is 9 nm, the pore diameter of FSM-16 is from 3 to 5 nm, and the pore diameter of MCM-41 is from 1 to 10 nm. Examples of such a regular mesopore material include mesoporous silica, mesoporous aluminosilicate, and mesoporous metallosilicate.

The precursor material (A) may be a commercially available product or a synthetic product. When the precursor material (A) is synthesized, it can be synthesized by a known method for synthesizing a regular mesopore material. For example, a mixed solution including a raw material containing the constituent elements of the precursor material (A) and a molding agent for defining the framework of the precursor material (A) is prepared, and the pH is adjusted as necessary to perform hydrothermal treatment (hydrothermal synthesis). Thereafter, the precipitate (product) obtained by hydrothermal treatment is recovered (e.g., filtered), washed and dried as necessary, and then calcinated to obtain the precursor material (A) which is a powdered regular mesopore material. Here, examples of the solvent of the mixed solution include water, organic solvents such as alcohols, and mixed solvents thereof. In addition, the raw material is selected according to the type of the support, and examples thereof include silica agents such as tetraethoxysilane (TEOS); fumed silica; and quartz sand. In addition, various types of surfactants, block copolymers, and the like can be used as the molding agent, and it is preferably selected depending on the type of the synthetic materials of the regular mesopore material. For example, a surfactant such as hexadecyltrimethylammonium bromide is preferable when producing MCM-41. The hydrothermal treatment can be performed at from 0 to 2000 kPa at from 80 to 800°C for from 5 hours to 240 hours in a sealed container. For example, the calcination treatment can be performed in air, at from 350 to 850°C for from 2 hours to 30 hours.

### Step S2: Step of Impregation

The prepared precursor material (A) is then impregnated with the metal-containing solution to obtain a precursor material (B).

The metal-containing solution is a solution containing a metal component (for example, a metal ion) corresponding to the metal element (M) constituting the metal oxide nanoparticles of the structured catalyst and can be prepared, for example, by dissolving a metal salt containing the metal element (M) in a solvent. Examples of the metal salt include chlorides, hydroxides, oxides, sulfates, and nitrates. Among these, nitrates are preferable. Examples of the solvent include water, organic solvents such as alcohols, and mixed solvents thereof.

The method for impregnating the precursor material (A) with the metal-containing solution is not particularly limited; however, for example, the metal-containing solution is preferably added in portions in a plurality of times while mixing the powdered precursor material (A) before the step of calcination described below. In addition, the surfactant is preferably added to the precursor material (A) as the additive before adding the metal-containing solution to the precursor material (A) from the perspective of allowing the metal-containing solution to enter the pores of the precursor material (A) more easily. It is believed that such additives serve to cover the outer surface of the precursor material (A) and inhibit the subsequently added metal-containing solution from adhering to the outer surface of the precursor material (A), making it easier for the metal-containing solution to enter the pores of the precursor material (A).

Examples of the additive include non-ionic surfactants such as polyoxyethylene alkyl ethers such as polyoxyethylene oleyl ether; and polyoxyethylene alkylphenyl ether. It is believed that these surfactants do not adhere to the interior of the pores because their molecular size is large, cannot enter the pores of the precursor material (A), and will not interfere with the penetration of the metal-containing solution into the pores. As the method for adding the non-ionic surfactant, for example, it is preferable to add from 50 to 500 mass% of the non-ionic surfactant to the precursor material (A) prior to the step of calcination described below. In a case where the added amount of the non-ionic surfactant to the precursor material (A) is less than 50 mass%, the aforementioned suppressing action will not easily occur, and when more than 500 mass% of the non-ionic surfactant is added to the precursor material (A), the viscosity is too high, which is not preferable. Thus, the added amount of the non-ionic surfactant to the precursor material (A) is a value within the range described above.

Furthermore, the added amount of the metal-containing solution added to the precursor material (A) is preferably adjusted as appropriate in consideration of the amount of the metal element (M) contained in the metal-containing solution with which the precursor material (A) is impregnated (that is, the amount of the metal element (M) present in the precursor material (B)). For example, prior to the step of calcination described below, the added amount of the metal-containing solution added to the precursor material (A), converted into a ratio of silicon (Si) constituting the precursor material (A) to the metal element (M) included in the metal-containing solution added to the precursor material (A) (the ratio of number of atoms Si/M), is preferably adjusted to from 10 to 1000 and more preferably from 50 to 200. For example, before adding the metal-containing solution to the precursor material (A), when a surfactant is added to the precursor material (A) as an additive and when the added amount of the metal-containing solution added to the precursor material (A), converted into the ratio of number of atoms Si/M, is from 50 to 200, from 0.5 to 2.5 mass% of the metal element (M) of the metal oxide nanoparticles or metal nanoparticles can be included in the structured catalyst. In the state of the precursor material (B), the amount of the metal element (M) present within the pores is generally proportional to the added amount of the metal-containing solution added to the precursor material (A) in a case where the metal concentration of the metal-containing solution, the presence or absence of additives, and other conditions such as temperature, pressure, and the like are the same. The amount of the metal element (M) present in the precursor material (B) is also in a proportional relationship to the amount of the metal element constituting the metal oxide nanoparticles present in the support of the structured catalyst. Thus, by controlling the added amount of the metal-containing solution added to the precursor material (A) to the range described above, the pores of the precursor material (A) can be sufficiently impregnated with the metal-containing solution, and thus the amount of the metal oxide nanoparticles to be present in the support of the structured catalyst can be adjusted.

After impregnating the precursor material (A) with the metal-containing solution, a washing treatment may be performed as necessary. Examples of the washing solution include water, organic solvents such as alcohols, and mixed solvents thereof. Furthermore, the precursor material (A) is preferably impregnated with the metal-containing solution, and after the washing treatment is performed as necessary, the precursor material (A) is further subjected to drying treatment. Drying treatments include overnight natural drying and high temperature drying at 150°C or lower. Note that when calcination treatment described below is performed in the state in which there is a large amount of moisture remaining in the metal-containing solution and the washing solution in the precursor material (A), the skeletal structure as the regular mesopore material of the precursor material (A) may be broken, and thus it is preferable to dry them sufficiently.

### Step S3: Step of Calcination

Next, a precursor material (C) is obtained by calcinating the precursor material (B) obtained by impregnating the precursor material (A), for obtaining the support of a porous framework composed of a zeolite-type compound, with the metal-containing solution.

For example, the calcination treatment is preferably performed in air, at from 350 to 850°C for from 2 hours to 30 hours. The metal component that has entered the pores of the regular mesopore material undergoes crystal growth by such calcination treatment, and metal oxide nanoparticles are formed in the pores.

### Step S4: Step of Hydrothermal Treatment

A mixed solution of the precursor material (C) and the structure directing agent is then prepared, and the precursor material (C) obtained by calcinating the precursor material (B) is hydrothermal-treated to obtain a structured catalyst.

The structure directing agent is a molding agent for directing the skeletal structure of the support of the structured catalyst and may be, for example, a surfactant. The structure directing agent is preferably selected according to the skeletal structure of the support of the structured catalyst and is preferably a surfactant such as tetramethylammonium bromide (TMABr), tetraethylammonium bromide (TEABr), or tetrapropylammonium bromide (TPABr).

The mixing of the precursor material (C) and the structure directing agent may be performed during the step of hydrothermal treatment or may be performed before the step of hydrothermal treatment. Furthermore, the method for preparing the mixed solution is not particularly limited, and the precursor material (C), the structure directing agent, and the solvent may be mixed simultaneously, or each of the dispersion solutions may be mixed after the precursor material (C) and the structure directing agent are each dispersed in individual solutions. Examples of the solvent include water, organic solvents such as alcohols, and mixed solvents thereof. In addition, it is preferable that the pH of the mixed solution is adjusted using an acid or a base before performing the hydrothermal treatment.

The hydrothermal treatment can be performed by a known method. For example, the hydrothermal treatment can be preferably performed at from 0 to 2000 kPa at from 80 to 800°C for from 5 hours to 240 hours in a sealed container. Furthermore, the hydrothermal treatment is preferably performed under basic condition. Although the reaction mechanism here is not necessarily clear, by performing hydrothermal treatment using the precursor material (C) as a raw material, the skeletal structure as the regular mesopore material of the precursor material (C) becomes increasingly disrupted. However, the action of the structure directing agent forms a new skeletal structure (porous structure) of the support of the structured catalyst while maintaining the position of the metal oxide nanoparticles within the pores of the precursor material (C). The structured catalyst obtained in this way includes a support of a porous framework and metal oxide nanoparticles present in the support, the support has channels in which a plurality of pores communicate with each other by the porous framework, and at least a portion of the metal oxide nanoparticles is held in the channels of the support.

Furthermore, in the present embodiment, in the step of hydrothermal treatment, a mixed solution in which the precursor material (C) and the structure directing agent are mixed is prepared, and the precursor material (C) is subjected to hydrothermal treatment. Not only limited to this, the precursor material (C) may be subjected to hydrothermal treatment without mixing the precursor material (C) and the structure directing agent.

The precipitate (structured catalyst) obtained after hydrothermal treatment is preferably washed, dried, and calcinated as necessary after recovery (e.g., filtration). Examples of the washing solution that can be used include water, an organic solvent such as alcohol, or a mixed solution thereof. Drying treatments include overnight natural drying and high temperature drying at 150°C or lower. Note that when calcination treatment is performed in the state in which there is a large amount of moisture remaining in the precipitate, the skeletal structure as a support of the structured catalyst may be broken, and thus it is preferable to dry the precipitate sufficiently. For example, the calcination treatment can be also performed in air, at from 350 to 850°C for from 2 hours to 30 hours. Such calcination treatment burns out the structure directing agent that has been attached to the structured catalyst. Furthermore, the structured catalyst can be used as is without subjecting the recovered precipitate to calcination treatment, depending on the intended use. For example, in a case where the environment in which the structured catalyst is used is a high temperature environment of an oxidizing condition, exposing the structured catalyst to the usage environment for a period of time allows the structure directing agent to be burned out. In this case, the same structured catalyst as when subjected to calcination treatment is obtained, so it is not necessary to perform the calcination treatment.

The method for producing a structured catalyst in the case where the catalytic substance is made of metal oxide nanoparticles has been described as an example, but when the catalytic substance is made of metal nanoparticles, the structured catalyst can be produced generally in the same manner as described above. Specifically, when the metal element (M) contained in the metal-containing solution that impregnates the precursor material (A) is a metal species resistant to oxidation (e.g., a noble metal), a structured catalyst can be produced in the same manner as described above.

In the production of a structured catalyst in which the catalytic substance is made of metal nanoparticles, when the metal element (M) contained in the metal-containing solution that impregnates the precursor material (A) is an easily oxidized metal species (e.g., Fe, Co, Ni, or Cu), the hydrothermal treatment described above is preferably followed by reduction treatment. When the metal element (M) contained in the metal-containing solution is an easily oxidized metal species, the metal component is oxidized by the heat treatment in the steps (steps S3 to S4) after the step of impregnation (step S2). Therefore, metal oxide nanoparticles are present in the support formed in the step of hydrothermal treatment (step S4). Therefore, in order to obtain a structured catalyst in which metal nanoparticles are present in a support, the precipitate recovered after the hydrothermal treatment is preferably subjected to calcination treatment and further to reduction treatment in reducing gas condition such as hydrogen gas (step S5: step of reduction treatment). In reduction treatment, the metal oxide nanoparticles present in the support are reduced, and metal nanoparticles corresponding to the metal element (M) constituting the metal oxide nanoparticles are formed. As a result, a structured catalyst in which metal nanoparticles are present in a support is obtained. Note that the reduction treatment may be performed as necessary. For example, when the environment in which the structured catalyst is used is reducing gas condition, the metal oxide nanoparticles are reduced by exposure to the usage environment for a certain period of time. In this case, the same structured catalyst as that obtained through reduction treatment is obtained, so it is not necessary to perform the reduction treatment.

### Modified Example of Structured Catalyst 1

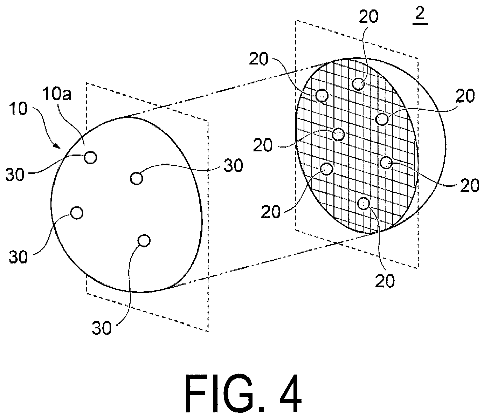

FIG. 4 is a schematic view illustrating a modified example of the structured catalyst 1 in FIG. 1.

Although the structured catalyst 1 of FIG. 1 illustrates the case in which it includes the support 10 and the catalytic substance 20 present in the support 10, the structured catalyst 1 is not limited to this configuration. For example, as illustrated in FIG. 4, the structured catalyst 2 may further include other catalytic substance 30 held on the outer surface 10a of the support 10.

The catalytic substance 30 is a substance that exhibits one or more catalytic capacities. The catalytic capacities of the other catalytic substance 30 may be the same or different from the catalytic capacity of the catalytic substance 20. Also, if both of the catalytic substances 20, 30 are substances having the same catalytic capacity, the material of the other catalytic substance 30 may be the same as or different from the material of the catalytic substance 20. According to this configuration, the content of the catalytic substances held in the structured catalyst 2 can be increased, and the catalytic activity of the catalytic substances can be further promoted.

In this case, the content of the catalytic substance 20 present in the support 10 is preferably greater than that of the other catalytic substance 30 held on the outer surface 10a of the support 10. As a result, the catalytic capacity of the catalytic substance 20 held in the support 10 becomes dominant, and catalytic capacity of the catalytic substances is stably exhibited.

Hereinbefore, the structured catalyst according to the present embodiments has been described, but the present invention is not limited to the above embodiments, and various modifications and changes are possible on the basis of the technical concept of the present invention.

For example, a hydrocracking device including the structured catalyst may be provided. The hydrocracking device includes, for example, a liquid-phase fluidized bed reaction column. By using a structured catalyst in the hydrocracking device having the above configuration, the same effects as described above can be achieved.

That is, the component can be decomposed by supplying an FT synthetic oil or a linear hydrocarbon having from 5 to 100 carbon atoms to the structured catalyst. For example, the same effects as described above can be achieved by using the structured catalyst in a hydrocracking device; and subjecting an FT synthetic oil or a linear hydrocarbon having from 5 to 100 carbon atoms to decomposition treatment in the hydrocracking device.

### Examples

### Example 1 to 384

### Synthesis of Precursor Material (A)

A mixed aqueous solution was prepared by mixing a silica agent (tetraethoxysilane (TEOS), available from Wako Pure Chemical Industries, Ltd.) and a surfactant as a molding agent. The pH was adjusted as appropriate, and hydrothermal treatment was performed under a condition of at from 80 to 350°C for 100 hours in a sealed container. Thereafter, the produced precipitate was filtered out, washed with water and ethanol, and then calcinated in air at 600°C for 24 hours to obtain the precursor material (A) of the type and having the pore diameter shown in Tables 1 to 8. Note that the following surfactant was used in accordance with the type of the precursor material (A) ("precursor material (A): surfactant").
- MCM - 41: Hexadecyltrimethylammonium bromide (CTAB) (available from Wako Pure Chemical Industries, Ltd.)
- SBA - 1: Pluronic P123 (available from BASF)

### Making of Precursor Materials (B) and (C)

Next, a metal-containing aqueous solution was prepared by dissolving a metal salt containing the metal element (M) in water according to the metal element (M) constituting the metal oxide nanoparticles of the type shown in Tables 1 to 8. Note that the metal salt was used in accordance with the type of metal oxide nanoparticles ("metal oxide nanoparticles: metal salt").
- CoOₓ: Cobalt nitrate (II) hexahydrate (available from Wako Pure Chemical Industries, Ltd.)
- NiOₓ: Nickel nitrate (II) hexahydrate (available from Wako Pure Chemical Industries, Ltd.)
- FeOₓ: Iron nitrate (III) nonahydrate (available from Wako Pure Chemical Industries, Ltd.)
- CuOₓ: Copper (II) nitrate trihydrate (available from Wako Pure Chemical Industries, Ltd.)

Next, a metal-containing aqueous solution was added to the powdered precursor material (A) in portions and dried at room temperature (20°C ± 10°C) for 12 hours or longer to obtain the precursor material (B).

Note that when the presence or absence of additives shown in Tables 1 to 8 is "yes", pretreatment, in which an aqueous solution of polyoxyethylene (15) oleyl ether (NIKKOL BO-15 V, available from Nikko Chemicals Co., Ltd.) is added as the additive to the precursor material (A) before adding the metal-containing aqueous solution, was performed, and then the metal-containing aqueous solution was added as described above. Note that when "no" is used in the presence or absence of additives, pretreatment with an additive such as that described above was not performed.

Furthermore, the added amount of the metal-containing aqueous solution added to the precursor material (A) was adjusted to become the value in Tables 1 to 8, converted into a ratio of silicon (Si) constituting the precursor material (A) to the metal element (M) included in the metal-containing aqueous solution (the ratio of number of atoms Si/M).

Next, the precursor material (B) impregnated with the metal-containing aqueous solution obtained as described above was calcinated in air at 600°C for 24 hours to obtain the precursor material (C).

### Synthesis of Structured Catalyst

The precursor material (C) obtained as described above and the structure directing agent shown in Tables 1 to 8 were mixed to produce mixed aqueous solutions. Hydrothermal treatment was performed in a sealed container under the conditions of at from 80 to 350°C and the pH and time shown in Tables 1 to 8. Thereafter, the generated precipitate was filtered off, washed with water, dried at 100°C for 12 hours or longer, and then calcinated in air at 600°C for 24 hours, thus obtaining a structured catalyst having the supports and the metal oxide nanoparticles as a catalytic substance shown in Tables 1 to 8 (Examples 1 to 384).

### Comparative Example 1

In Comparative Example 1, cobalt oxide powder (II, III) having an average particle size of 50 nm or less (available from Sigma-Aldrich Japan LLC) was mixed with MFI type silicalite and then subjected to hydrogen reduction treatment in the same manner as in Examples, and a functional structural body in which cobalt nanoparticles were attached as the functional substance to the outer surface of the silicalite as the skeletal body was obtained. MFI type silicalite was synthesized in the similar manner as in Examples 52 to 57 except for a step of adding a metal.

### Comparative Example 2

In Comparative Example 2, MFI type silicalite was synthesized in the similar manner as in Comparative Example 1 except that a step of attaching the cobalt nanoparticles was omitted.

### Examples 385 to 768

In Examples 385 to 768, the precursor material (C) was obtained in the same manner as in Example 1 except that the synthesis of the precursor material (A) and the conditions in the production of the precursor materials (B) and (C) were changed as in Tables 9 to 16. Note that the metal salt used in making the metal-containing aqueous solution was used in accordance with the type of metal nanoparticles below ("metal nanoparticles: metal salt").
- Co: Cobalt nitrate (II) hexahydrate (available from Wako Pure Chemical Industries, Ltd.)
- Ni: Nickel nitrate (II) hexahydrate (available from Wako Pure Chemical Industries, Ltd.)
- Fe: Iron nitrate (III) nonahydrate (available from Wako Pure Chemical Industries, Ltd.)
- Cu: Copper (II) nitrate trihydrate (available from Wako Pure Chemical Industries, Ltd.)

### Synthesis of Structured Catalyst

The precursor material (C) obtained as described above and the structure directing agent shown in Tables 9 to 16 were mixed to produce a mixed aqueous solution and subjected to hydrothermal treatment in a sealed container under conditions of at from 80 to 350°C and the pH and time shown in Tables 9 to 16. Thereafter, the produced precipitate was filtered off, washed with water, dried at 100°C for 12 hours or longer, and then calcinated in air at 600°C for 24 hours. Thereafter, the calcinated product was recovered and reduced at 400°C for 350 minutes under inflow of hydrogen gas to obtain a structured catalyst shown in Tables 9 to 16 having a support and metal nanoparticles as a catalytic substance (Examples 385 to 768).

### Evaluation

Various characteristic evaluations were performed on Examples 1 to 768 and the silicalite of Comparative Examples 1 and 2 under the conditions described below.

### [A] Cross-sectional Observation

Observation samples were made using a pulverization method for the catalytic structural bodies of the above examples and the silicalite of the comparative examples, and the cross-sectional observation was performed using a transmission electron microscope (TEM) (TITAN G2, available from FEI).

As a result, it was confirmed that, in the structured catalyst of the example described above, the catalytic substance was present and held in the support made of silicalite or zeolite. On the other hand, in the silicalite of Comparative Example 1, the catalytic substance was only attached to the outer surface of the support and was not present in the support.

In addition, of the examples described above, FeOx nano-particles were capsuled in the functional structure cut out by FIB (focused ion beam) processing, and the section element analysis was performed using SEM (SU8020, available from Hitachi High-Technologies Corporation), EDX (X-Max, available from Horiba, Ltd.). As a result, elements Fe were detected from inside the skeletal body.

It was confirmed that iron oxide nanoparticles were present in the skeletal body from the results of the cross-sectional observation using TEM and SEM/EDX.

### [B] Average Inner Diameter of the Channels of the Support and Average Particle Size of the Catalytic Substance

In the TEM image taken by the cross-sectional observation performed in evaluation [A] above, 500 channels of the support were randomly selected, the respective major diameter and the minor diameter were measured, the respective inner diameters were calculated from the average values (N = 500), and the average value of the inner diameter was determined to be the average inner diameter D_{F} of the channels of the support. In addition, for the catalytic substance, 500 catalytic substances were randomly selected from the TEM image, the respective particle sizes were measured (N = 500), and the average value thereof was determined to be the average particle size D_{C} of the catalytic substance. The results are shown in Tables 1 to 16.

Also, SAXS (small angle X-ray scattering) was used to analyze the average particle size and dispersion status of the catalytic substance. Measurements by SAXS were performed using a SPring-8 beam line BL19B2. The obtained SAXS data was fitted with a spherical model using the Guinier approximation method, and the particle size was calculated. The particle size was measured for the structured catalyst in which the metal oxide is iron oxide nanoparticles (FeOₓ). Furthermore, as a comparative reference, commercially available iron oxide nanoparticles(Fe₂O₃) (available from Wako Pure Chemical Industries, Ltd.) were observed and measured by SEM.

As a result, in the commercial product, various sizes of iron oxide nanoparticles were randomly present in a range of particle sizes of approximately from 50 nm to 400 nm, whereas in the measurement results of SAXS, scattering peaks with particle sizes of 10 nm or less were also detected in the catalytic structural bodies of each example having an average particle size of from 1.2 nm to 2.0 nm determined from the TEM image. From the results of SAXS measurement and the SEM/EDX cross-sectional measurement, it was found that a catalytic substance having a particle size of 10 nm or less was present in the support in a markedly highly dispersed state with a uniform particle size. In addition, in the catalytic structural bodies of Examples 385 to 768, even though reduction treatment was performed at 400°C or higher, a particle size of 10 nm or less was maintained in each example of Examples 385 or later having an average particle size of from 1.2 nm to 2.0 nm determined from the TEM image.

### [C] Relationship between the Added Amount of the Metal-containing Solution and the Amount of Metal Embedded in the Skeletal Body

A structured catalyst in which metal oxide nanoparticles were embedded in the support at an added amount of the ratio of number of atoms of Si/M = 50, 100, 200, 1000 (M = Co, Ni, Fe, and Cu) was produced, and then the amount of metal (mass%) that was embedded in the support of the structured catalyst produced at the above added amount was measured. Note that in the present measurement, the functional structural bodies having the ratio of number of atoms of Si/M = 100, 200, and 1000 were produced by adjusting the added amount of the metal-containing solution in the same manner as the catalytic structural bodies having the ratio of number of atoms of Si/M = 100, 200, and 1000 of Examples 1 to 384, and the catalytic structural bodies having the ratio of number of atoms of Si/M = 50 were produced in the same manner as the catalytic structural bodies having the ratio of number of atoms of Si/M = 100, 200, and 1000, except that the added amount of the metal-containing solution was changed.

The amount of metal was quantified by ICP (radio frequency inductively coupled plasma) alone or in combination with ICP and XRF (fluorescence X-ray analysis). XRF (energy dispersive fluorescent x-ray analyzer "SEA1200VX", available from SII Nanotechnology) was performed under conditions of vacuum condition, an accelerating voltage 15 kV (using a Cr filter), or an accelerating voltage 50 kV (using a Pb filter).

XRF is a method for calculating the amount of metal present in terms of fluorescence intensity, and XRF alone cannot calculate a quantitative value (in terms of mass%). Therefore, the metal content of the structured catalyst to which the metal was added at Si/M = 100 was determined by ICP analysis, and the metal content of the structured catalyst in which the metal was added at Si/M = 50 and less than 100 was calculated based on XRF measurement results and ICP measurement results.

As a result, it was confirmed that the amount of the metal embedded in the structural body increased as the added amount of the metal-containing solution increased, at least within a range that the ratio of number of atom was within from 50 to 1000.

### [D] Performance Evaluation

The catalytic capacity (performance) of the catalytic substances was evaluated for the catalytic structural bodies of the examples and the silicalite of the comparative examples. The results are shown in Tables 1 to 16.

### (1) Catalytic Activity

The catalytic activity was evaluated under the following conditions:

First, 0.2 g of the structured catalyst was charged in a normal pressure flow reactor, and a decomposition reaction of butylbenzene (model material for heavy oil) was performed with nitrogen gas (N₂) as a carrier gas (5 ml/min) at 400°C for 2 hours.

After completion of the reaction, the compositions of the recovered generated gas and the generated liquid that were collected were analyzed by gas chromatography mass spectrometry (GC/MS). Note that, as the analysis device for the generated gas, TRACE 1310 GC (available from Thermo Fisher Scientific Inc., detector: thermal conductivity detector) was used, and as the analysis device for the generated liquid, TRACE DSQ (available from Thermo Fisher Scientific Inc., detector: mass detector, ionization method: EI (ion source temperature 250°C, MS transfer line temperature of 320°C, detector: thermal conductivity detector)) was used.

Based on the analysis results, the yield (mol%) of a compound having a molecular weight lower than that of butyl benzene (specifically, benzene, toluene, ethylbenzene, styrene, cumene, methane, ethane, ethylene, propane, propylene, butane, butene, and the like) was calculated. The yield of the compound was calculated as the percentage (mol%) of the total amount (mol) of the amount of the compound having a lower molecular weight than that of the butylbenzene contained in the generated liquid (mol%) relative to the amount of butylbenzene material (mol) before the reaction.

In the present example, when the yield of a compound having a molecular weight lower than that of butylbenzene contained in the product liquid was 40 mol% or more, it was evaluated that catalyst activity (resolution) is excellent, "A". When it was 25 mol% or more and less than 40 mol%, it was evaluated that catalyst activity is good, "B". When it was 10 mol% or more and less than 25 mol%, it was evaluated that catalyst activity is not good but is at a pass level (acceptable), "C". When it was less than 10 mol%, it was evaluated that catalyst activity is poor (unacceptable), "D".

Additionally, the catalytic activity of the upgrading test was evaluated under the following conditions. First, 0.2 g of the functional structural body was charged in a normal pressure flow reactor, and a decomposition reaction of hexane (a model material) was performed at 650°C for 1 hour.

After completion of the reaction, the generated gas and the generated liquid that were collected were analyzed by gas chromatography mass spectrometry (GC/MS) for the composition. Note that, as the analysis device for the generated gas, TRACE 1310 GC (available from Thermo Fisher Scientific Inc., detector: thermal conductivity detector) was used, and as the analysis device for the generated liquid, TRACE DSQ (available from Thermo Fisher Scientific Inc., detector: mass detector, ionization method: EI (ion source temperature 250°C, MS transfer line temperature of 320°C, detector: thermal conductivity detector)) was used.

### Evaluation Criteria

Based on the results of the abovementioned component analysis, the yield (mol%) of compounds having a molecular weight smaller than that of hexane (C5 or less hydrocarbons) was determined. When the yield was 10 mol% or more, the catalytic activity (resolution) was evaluated to be excellent, "B", when the yield was 5 mol% or more and less than 10 mol%, the catalytic activity was evaluated to be good, "C", and when the yield was less than 5 mol%, the catalytic activity was evaluated to be poor (unacceptable), "D". In the present following experiment, a catalyst having good activity and heat resistance in a butylbenzene decomposition reaction was used for the evaluation. The results are shown in Table 17.

### (2) Durability (Life Time)

The durability was evaluated under the following conditions:

First, the structured catalyst used in the evaluation (1) above was recovered and heated at 650°C for 12 hours to produce a structured catalyst after heating. Next, a decomposition reaction of butylbenzene (model material of heavy oil) was performed by the similar method as in the evaluation (1) above using the obtained structured catalyst after heating, and component analysis of the generated gas and the generated liquid was performed in the similar manner as in the above evaluation (1).

Based on the obtained analytical results, the yield (mol%) of a compound having a molecular weight lower than that of butylbenzene was determined in the similar manner as in the evaluation (1) above. Furthermore, the degree of maintaining the yield of the above compound by the structured catalyst after heating was compared to the yield of the above compound by the structured catalyst before heating (the yield determined in evaluation (1) above). Specifically, the percentage (%) of the yield of the above compound obtained by the structured catalyst after heating (yield determined by evaluation (2) above) to the yield of the above compound by the structured catalyst before heating (yield determined by the present evaluation (1) above) was calculated.

In the present embodiment, when the yield of the compound (yield determined by the present evaluation (2) above) by the structured catalyst after heating was maintained at least 80% compared to the yield of the compound (yield determined by evaluation (1) above) by the structured catalyst before heating, it was evaluated that durability (heat resistance) is excellent, "A". When it was maintained 60% or more and less than 80%, it was evaluated that durability (heat resistance) is good, "B". When it was maintained 40% or more and less than 60%, it was evaluated that durability (heat resistance) is not good but is at a pass level (acceptable), "C". When it was reduced below 40%, it was evaluated that durability (heat resistance) is poor (unacceptable), "D".

Comparative Examples 1 and 2 were also subjected to the same performance evaluations as those in the evaluations (1) and (2) above. Comparative Example 2 is the support itself and includes no catalytic substance. Therefore, in the performance evaluation described above, only the support of Comparative Example 2 was charged in place of the structured catalyst. The results are shown in Table 8.

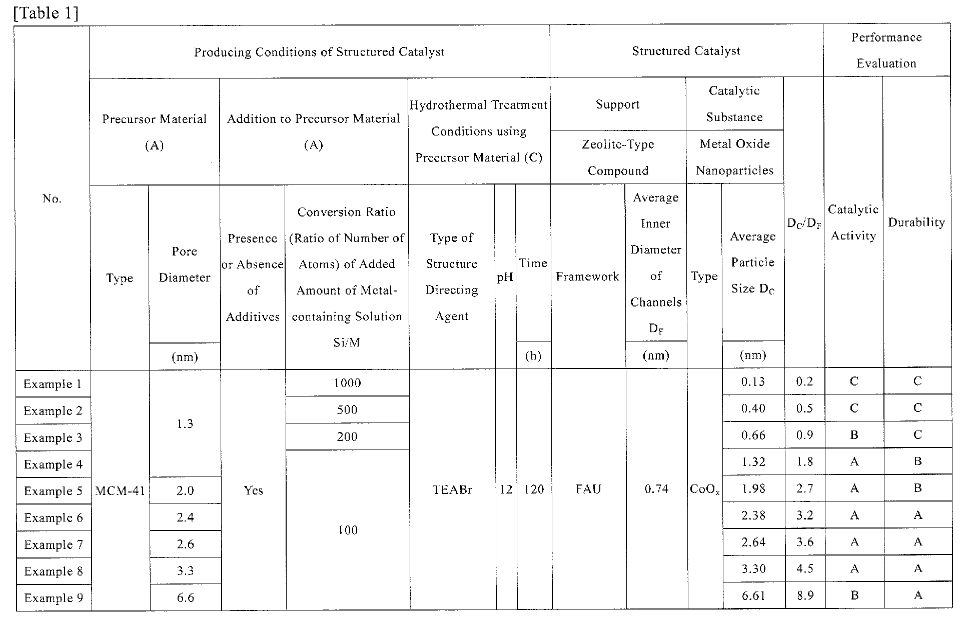

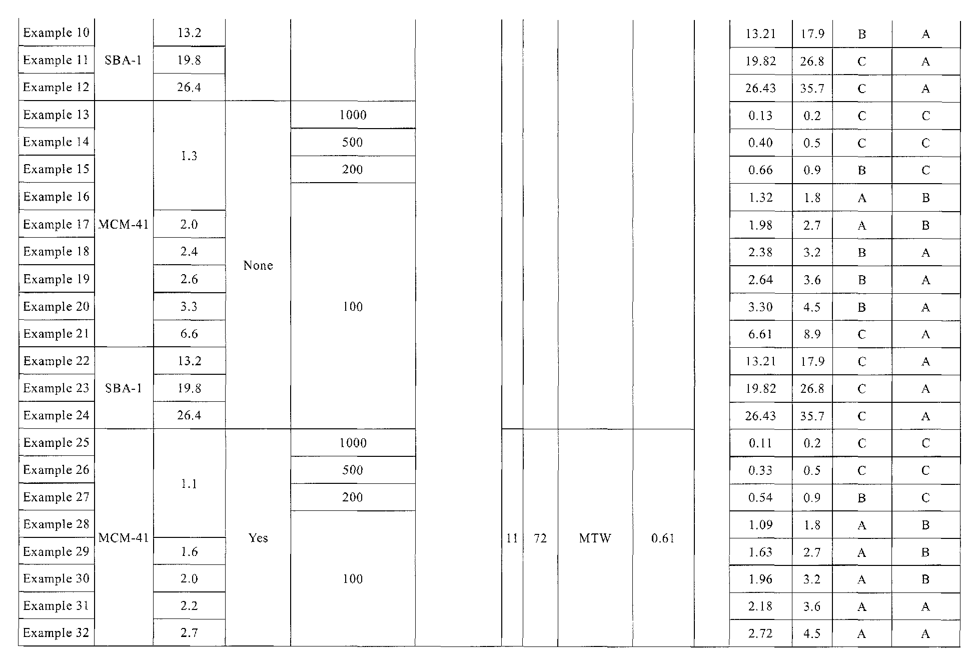

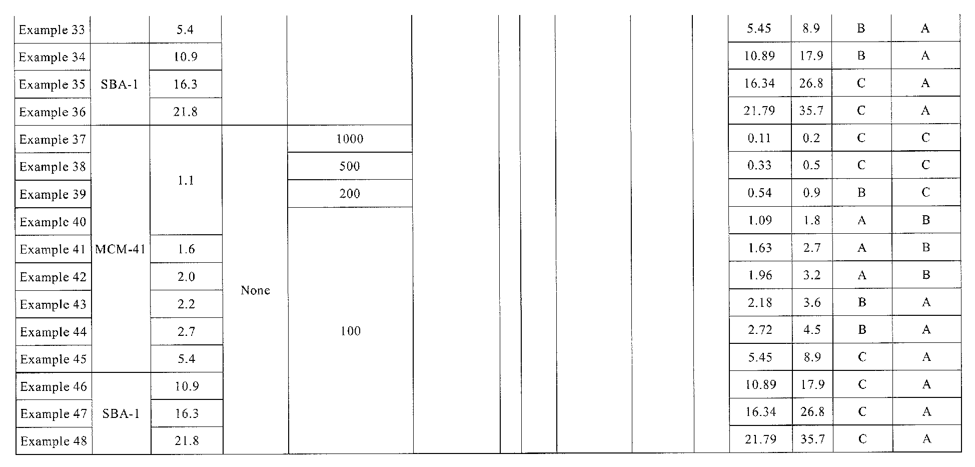

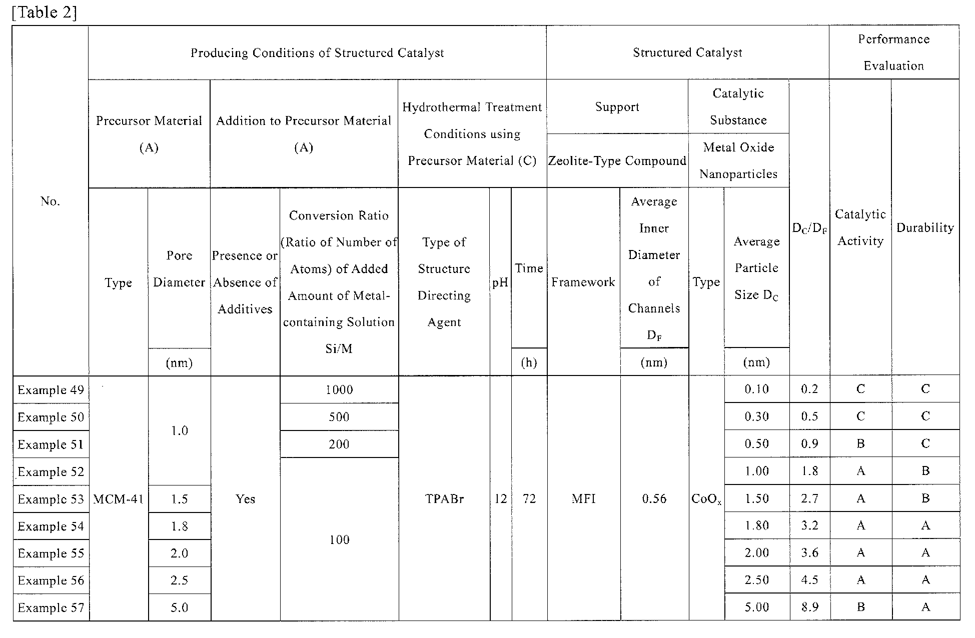

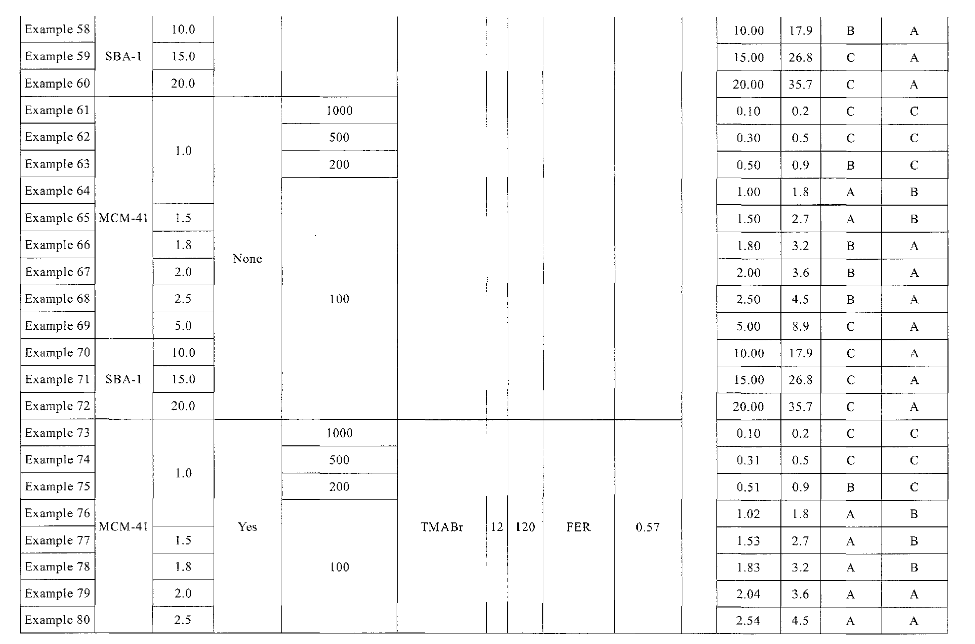

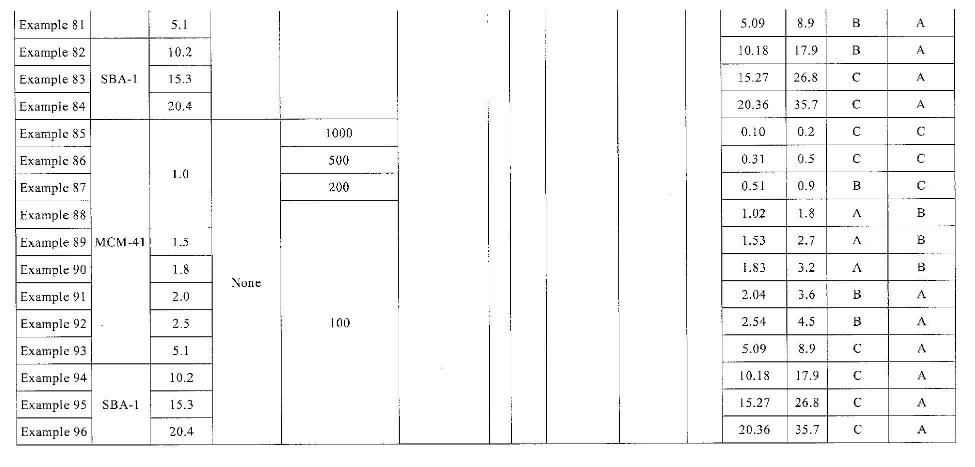

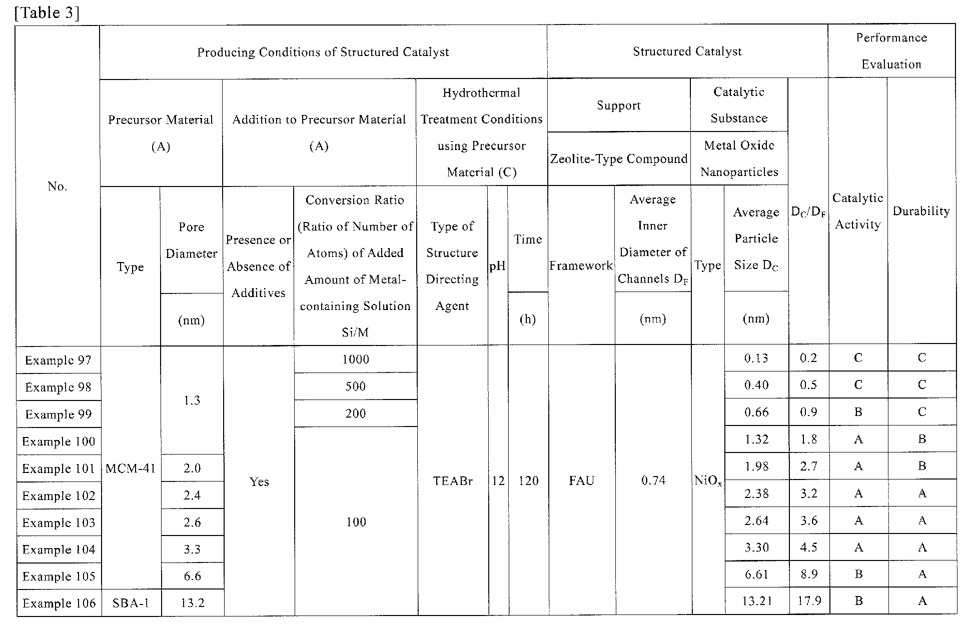

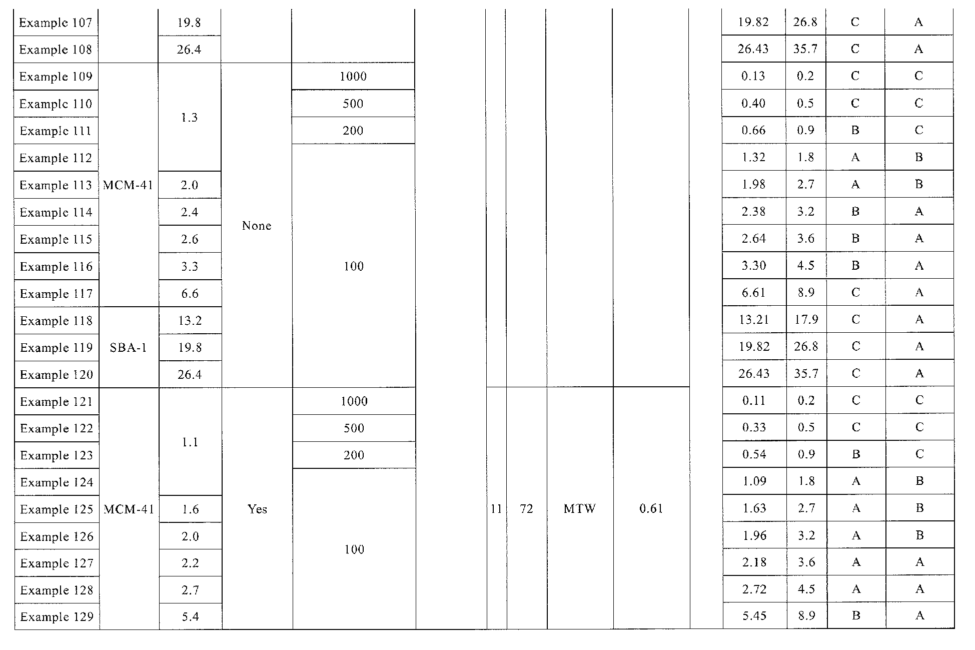

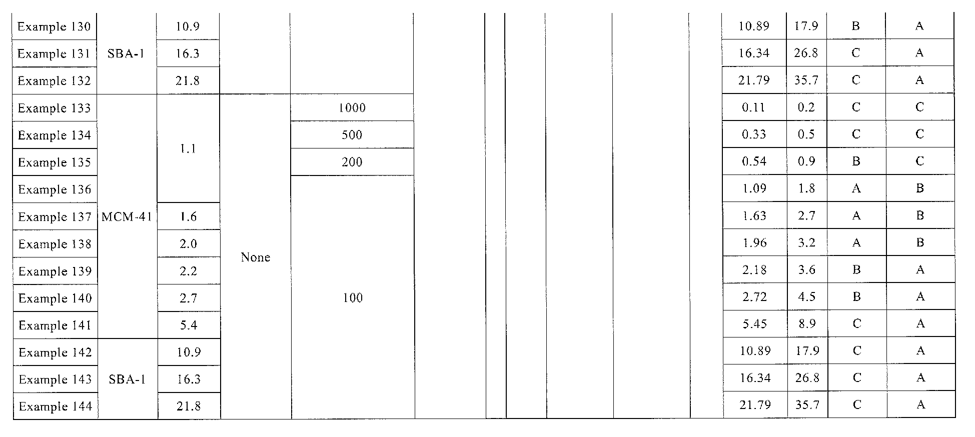

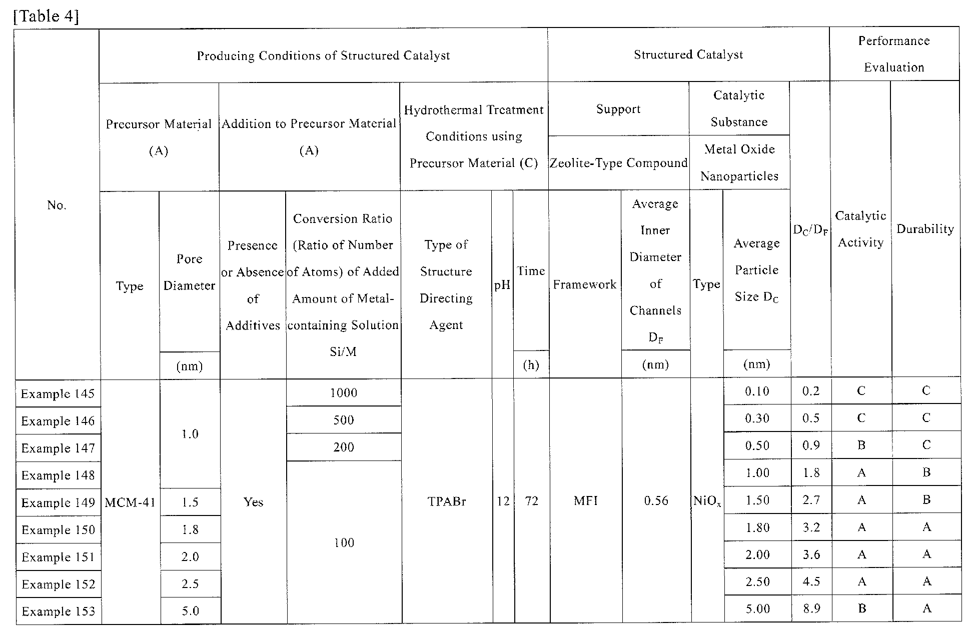

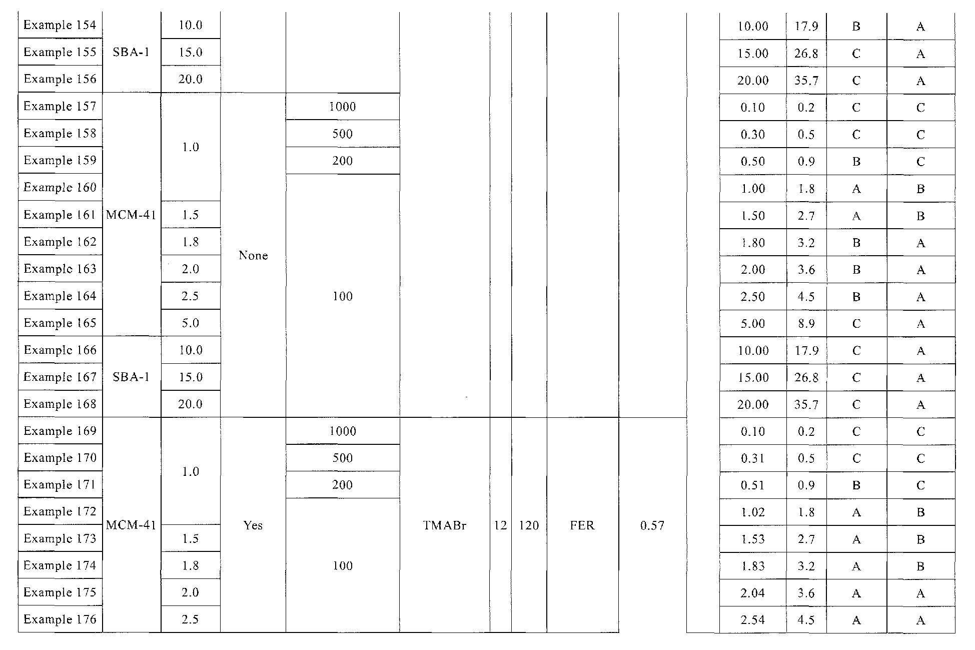

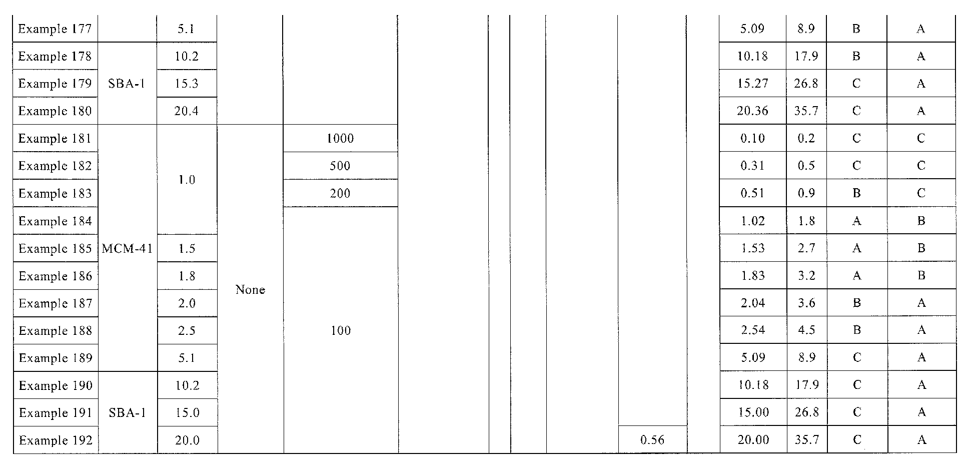

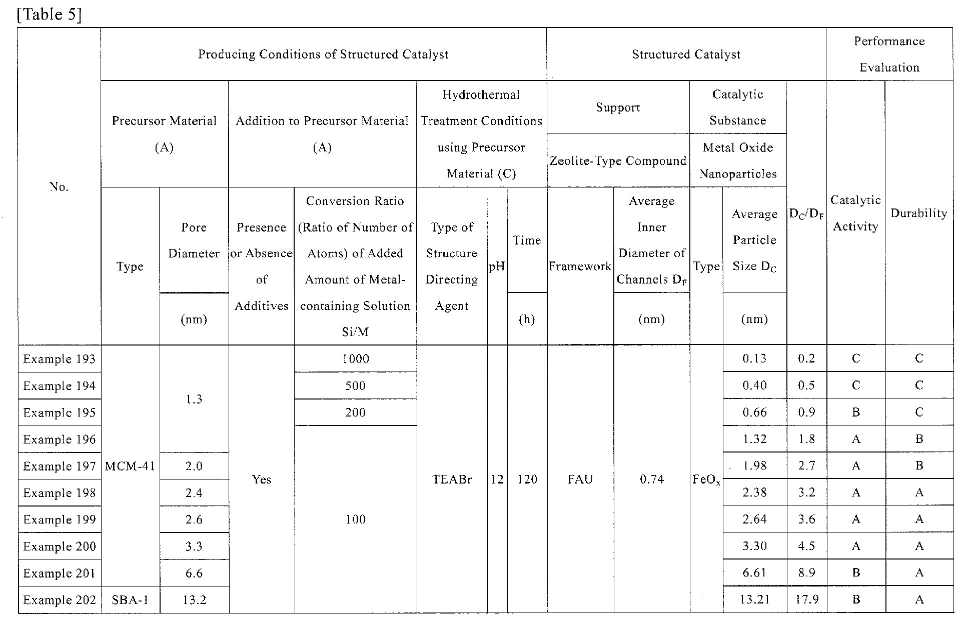

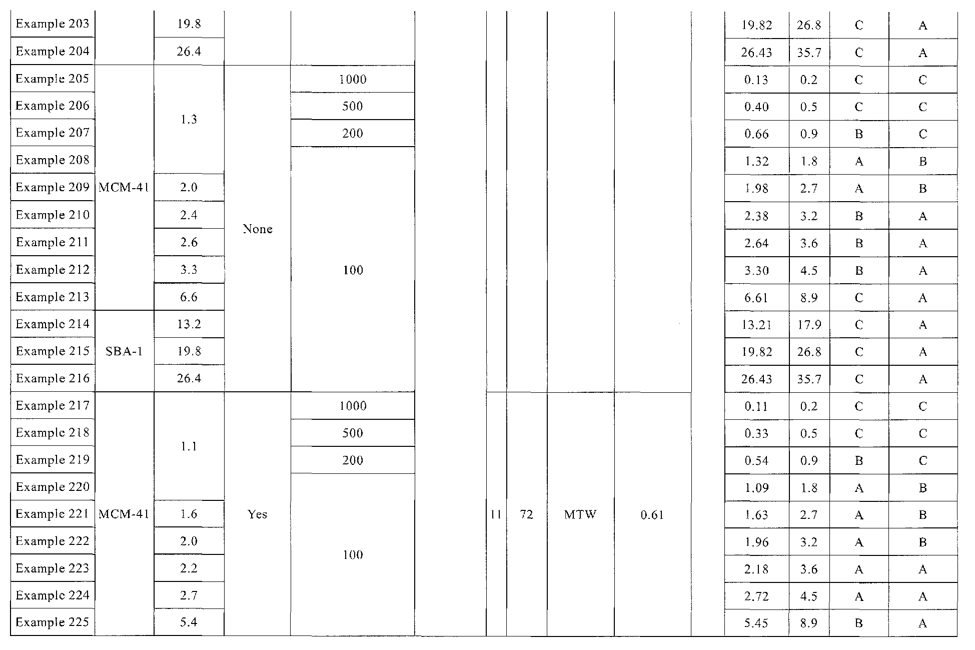

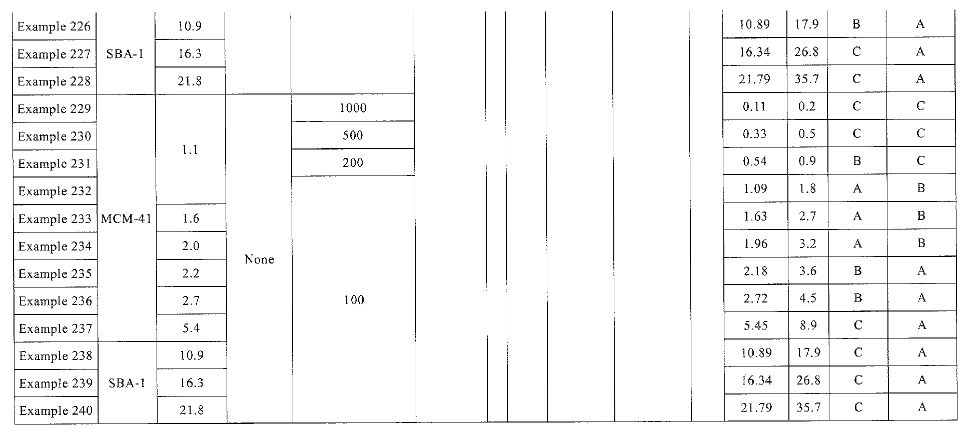

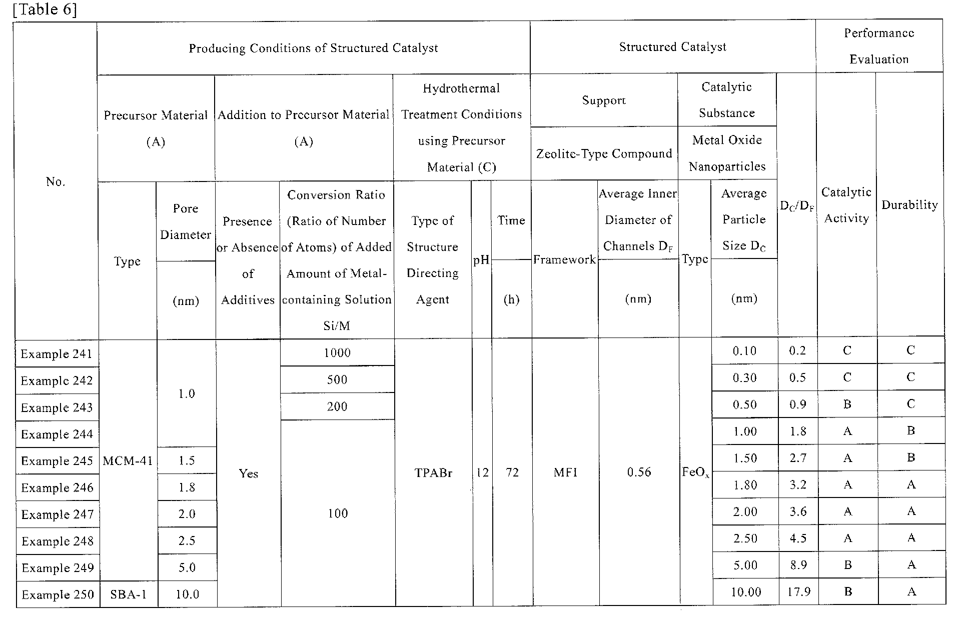

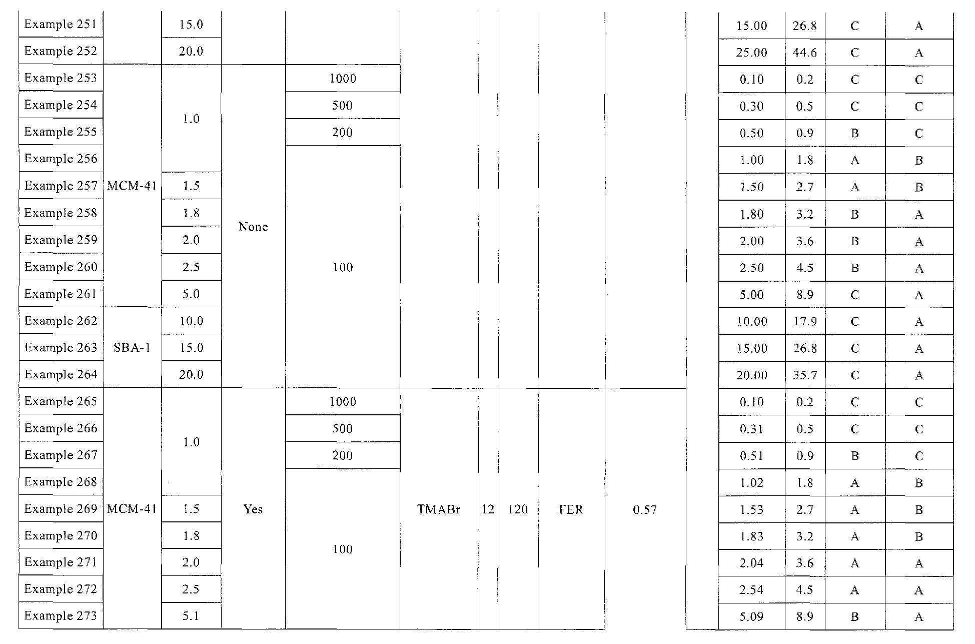

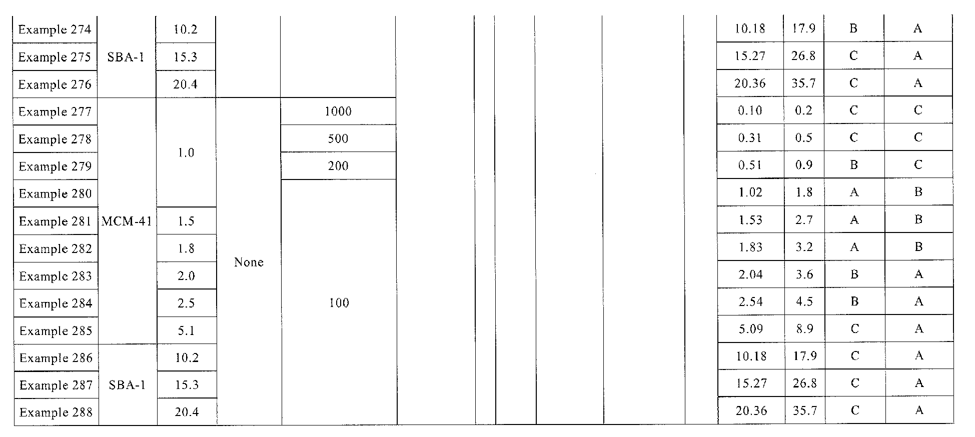

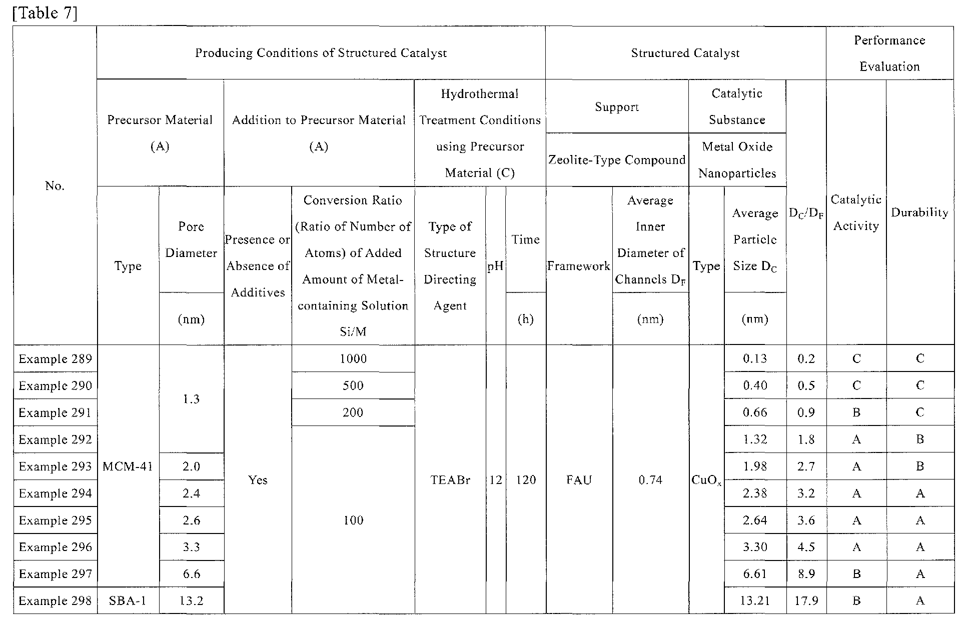

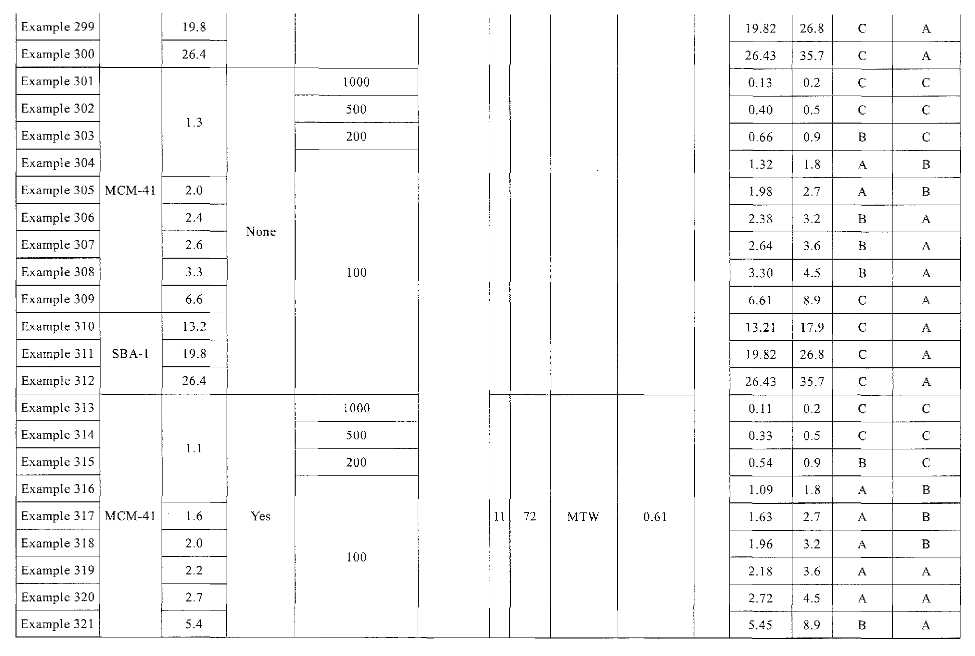

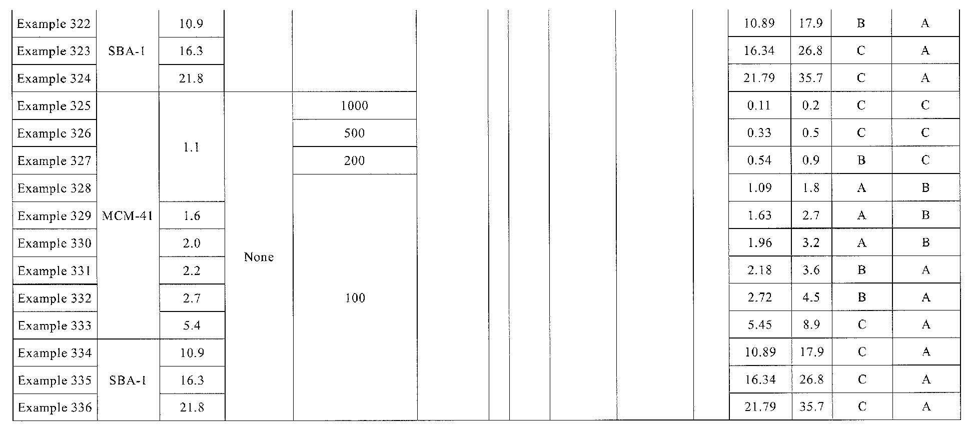

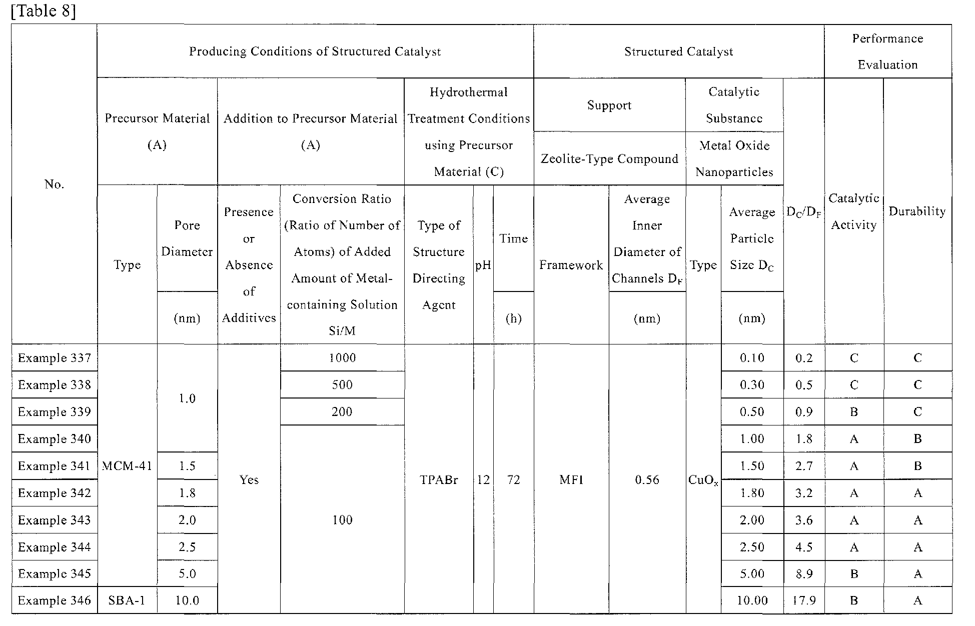

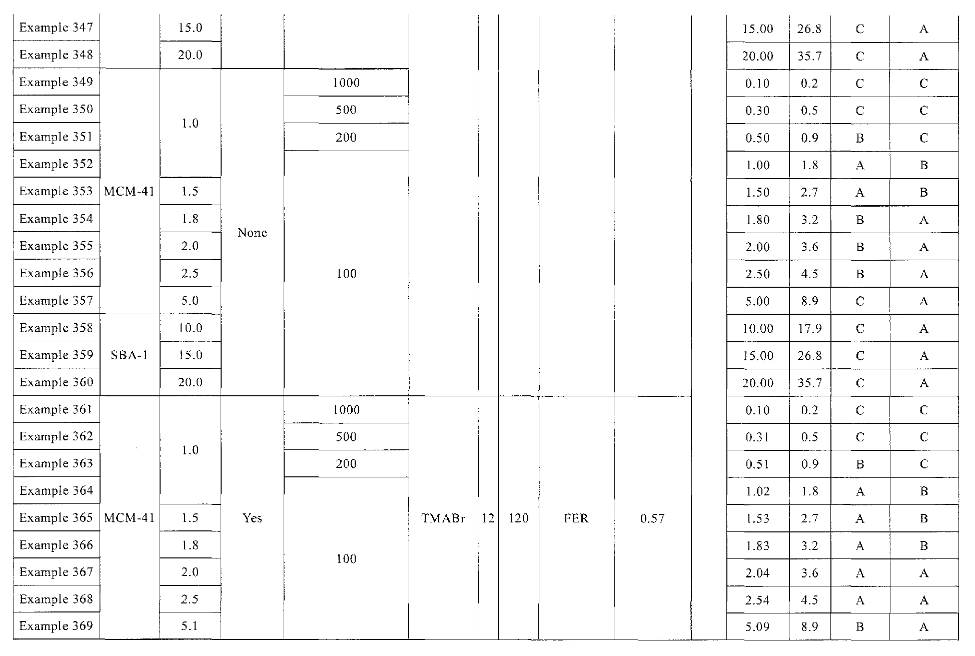

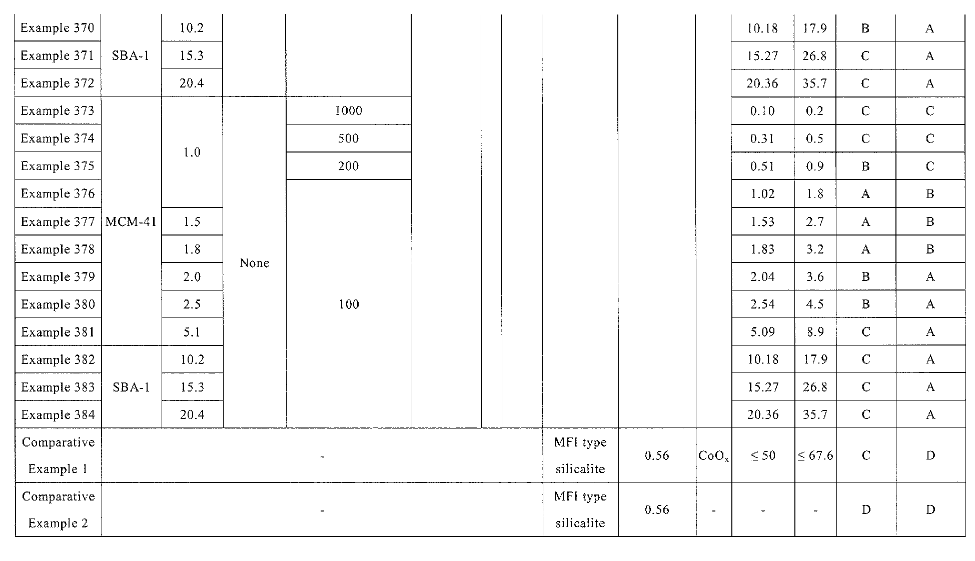

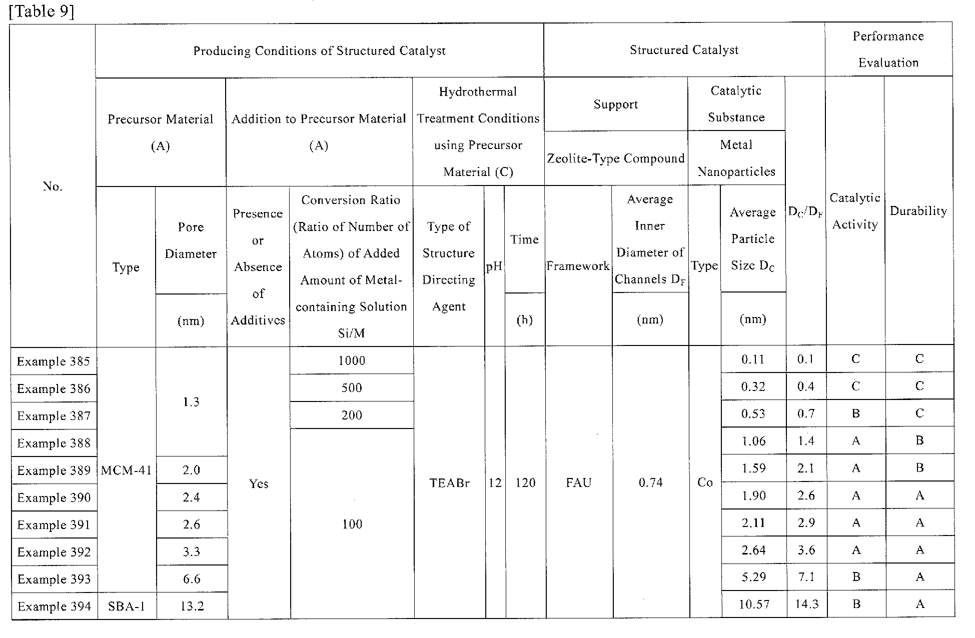

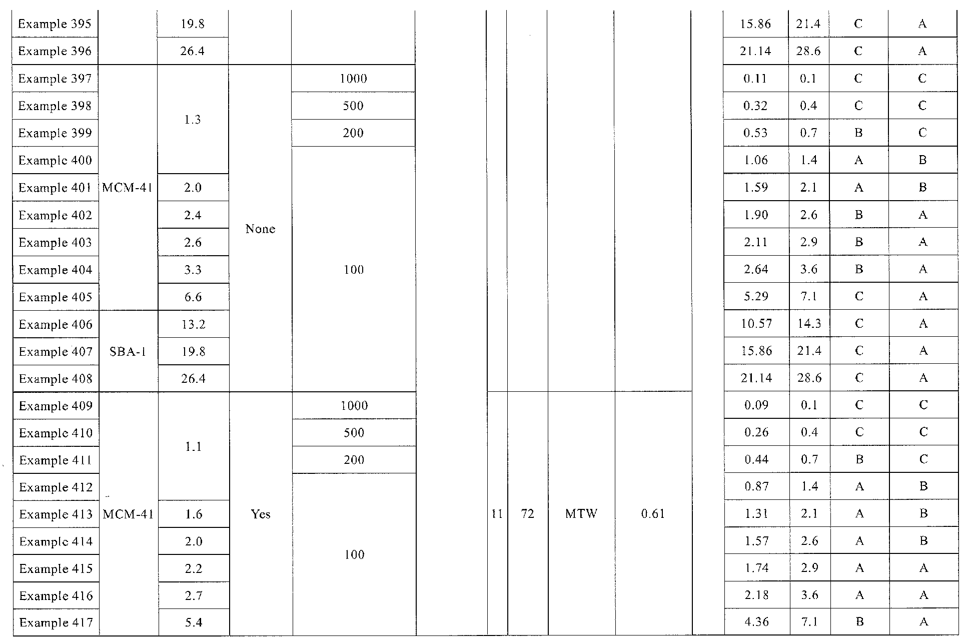

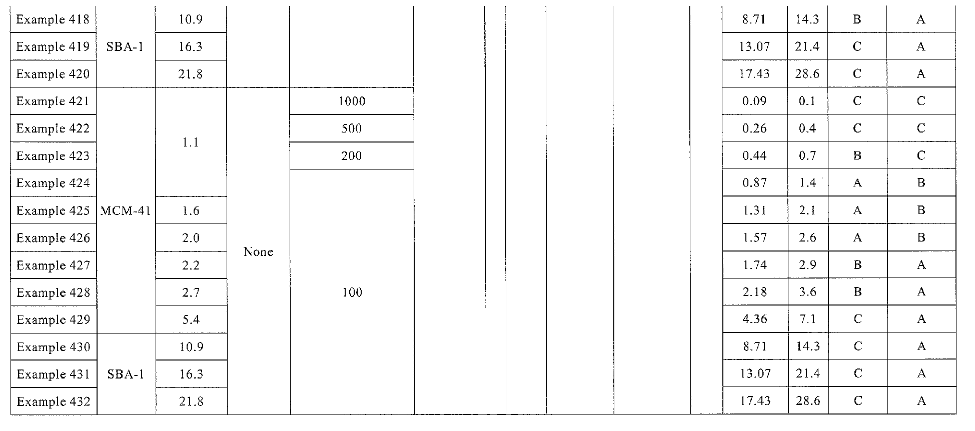

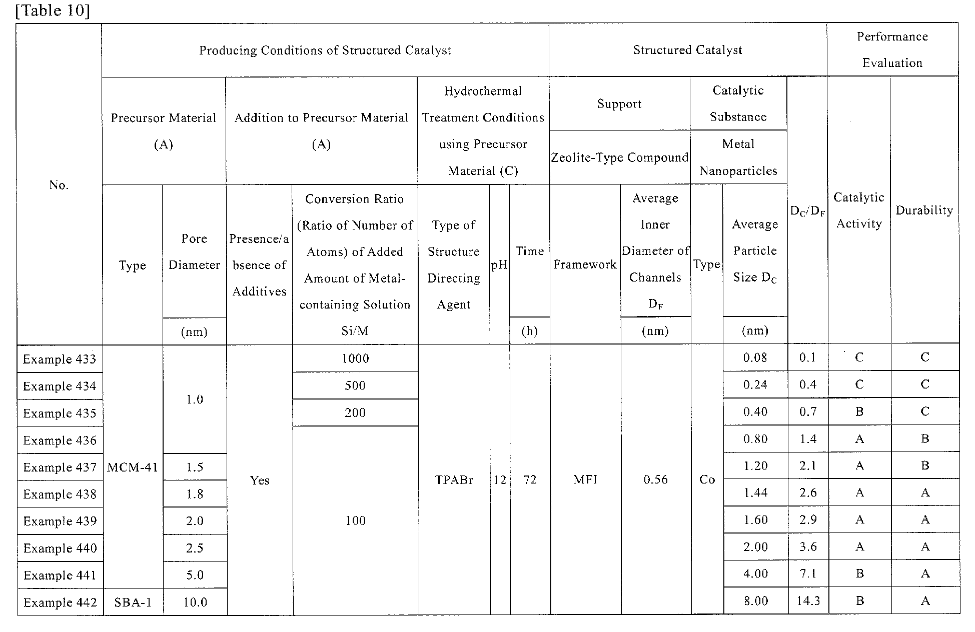

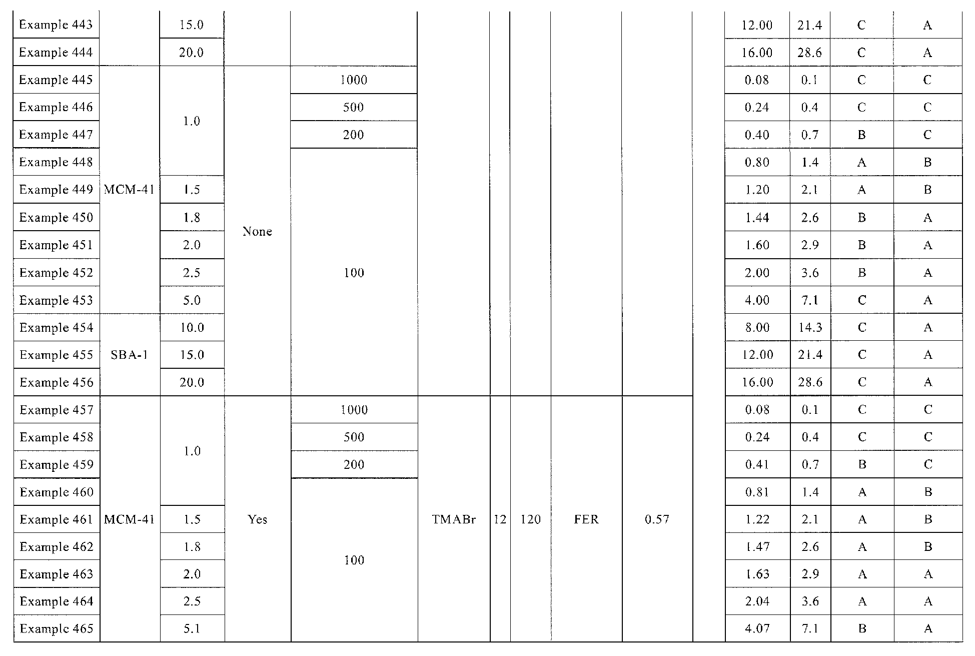

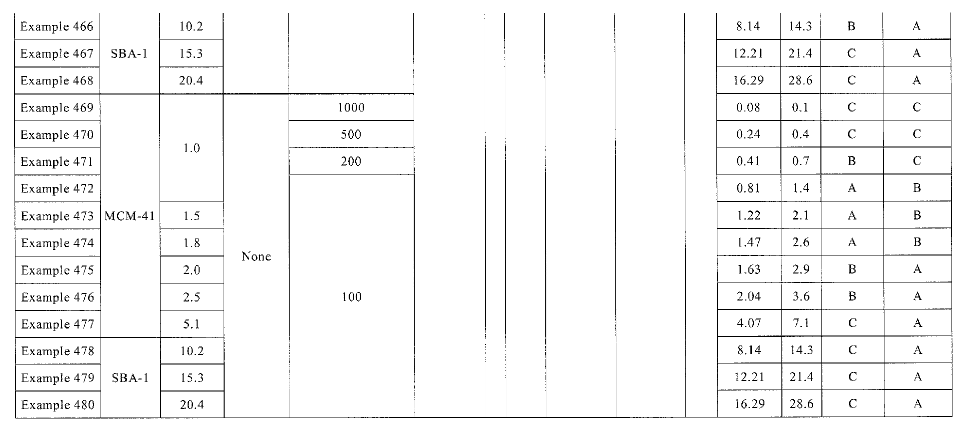

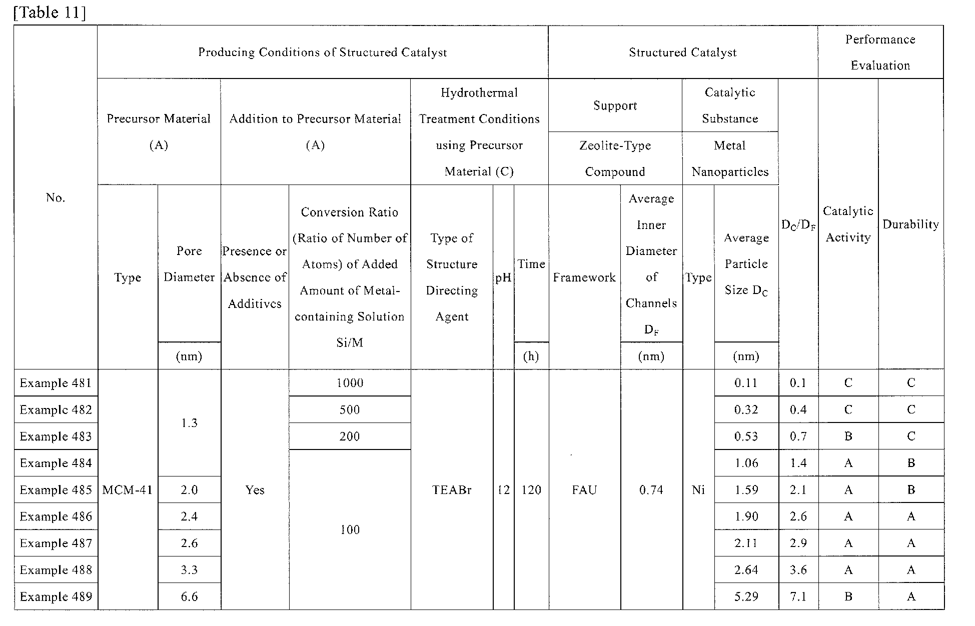

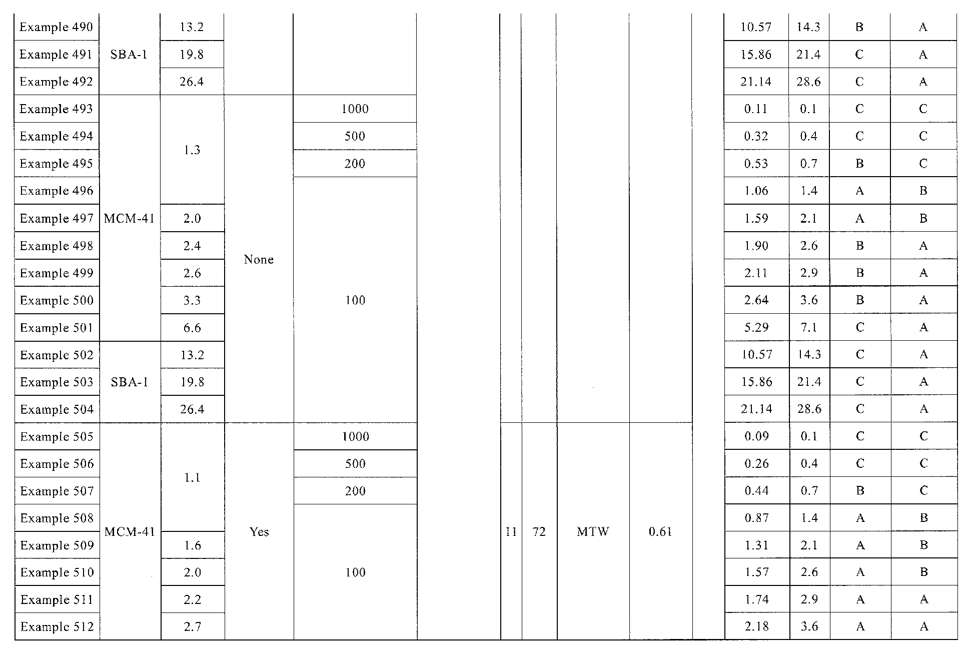

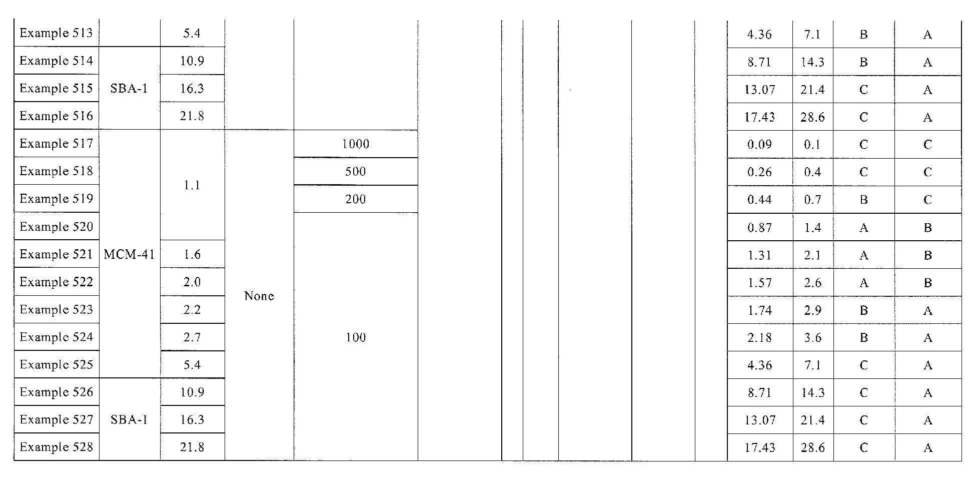

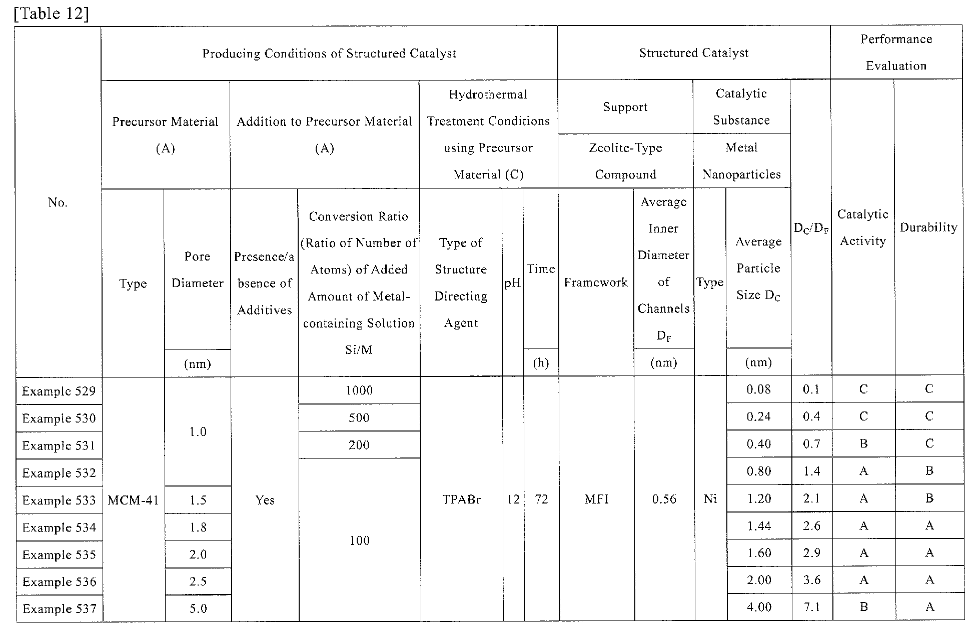

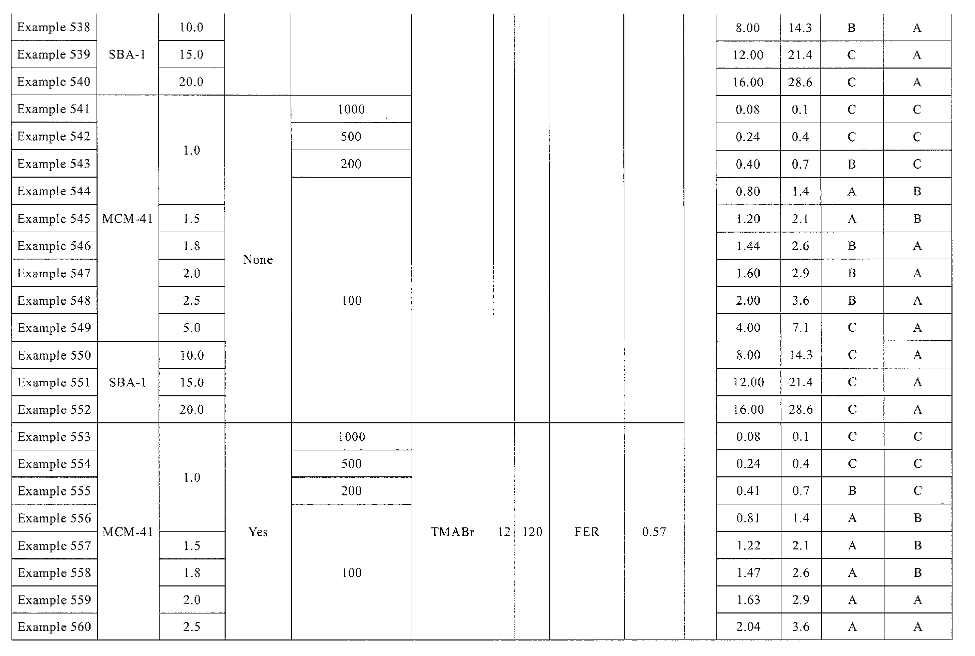

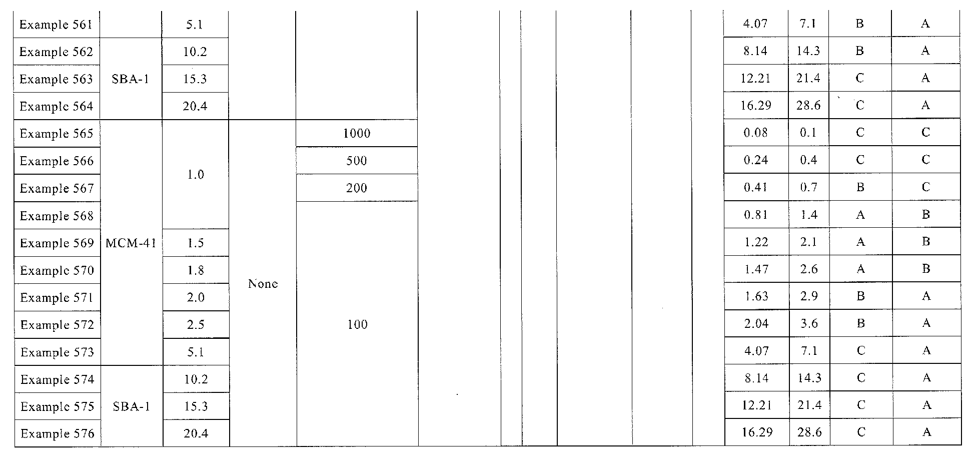

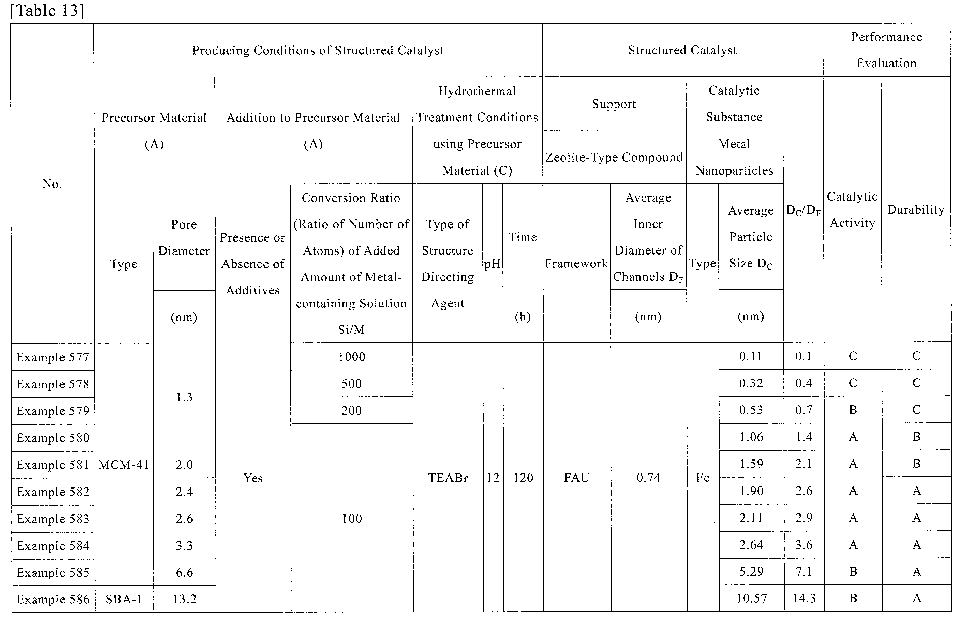

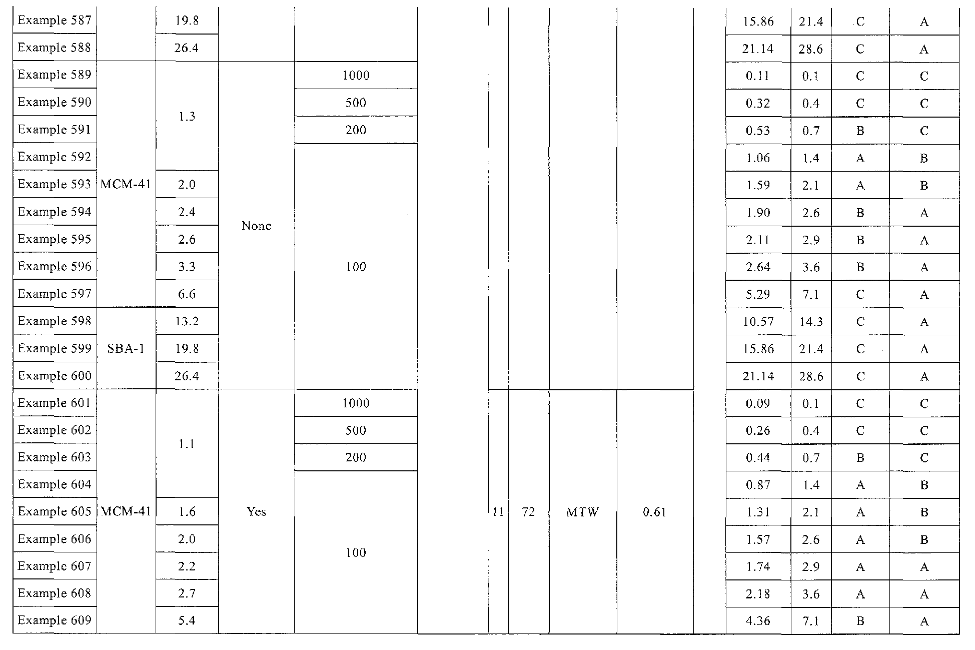

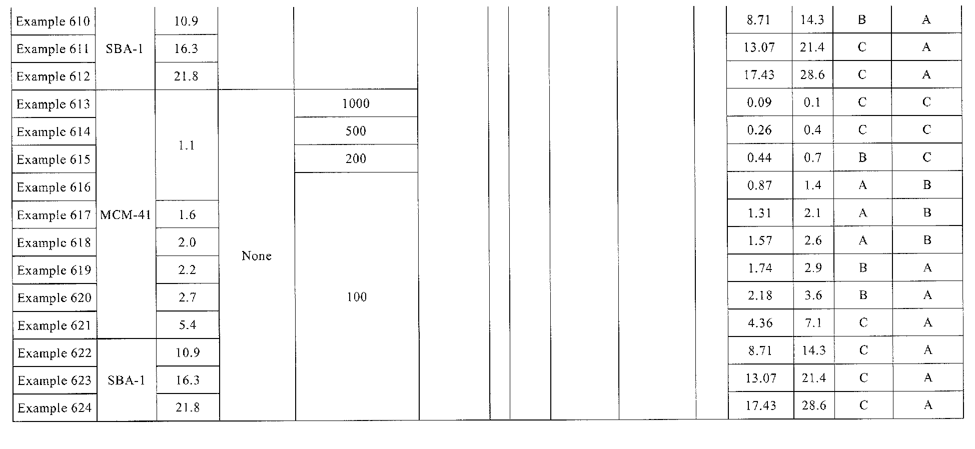

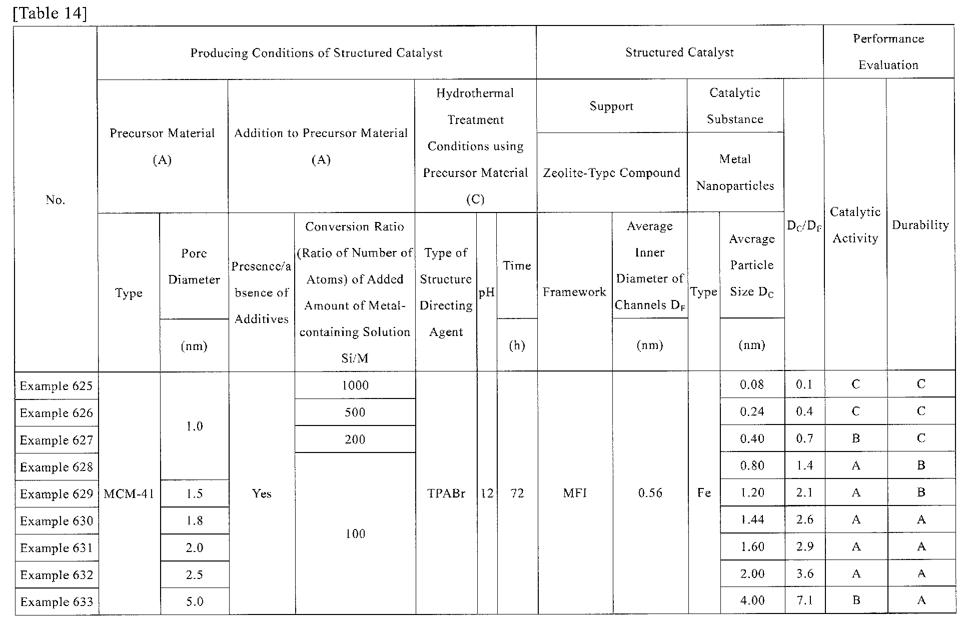

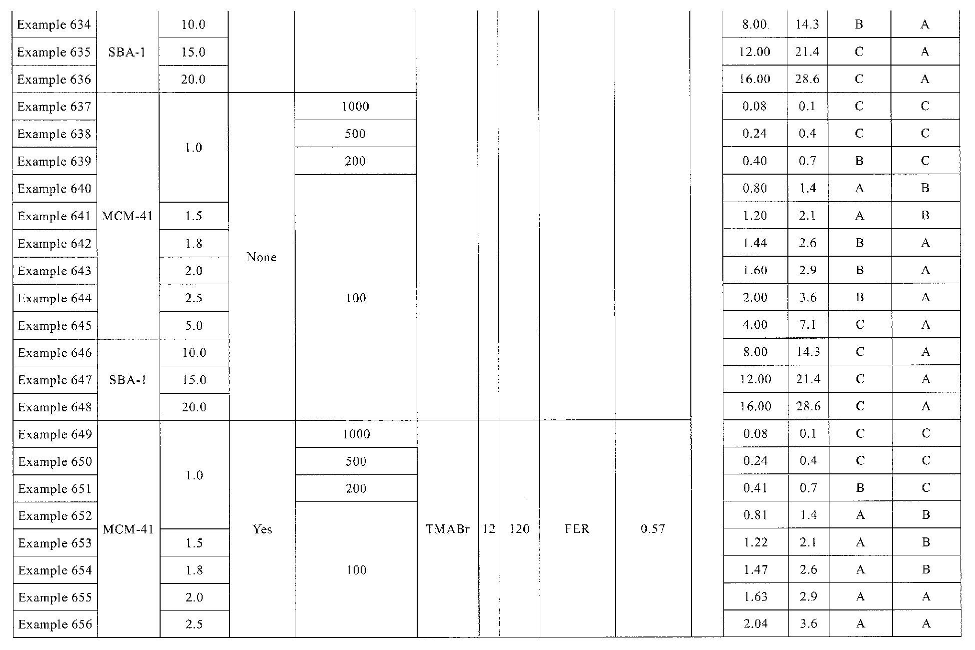

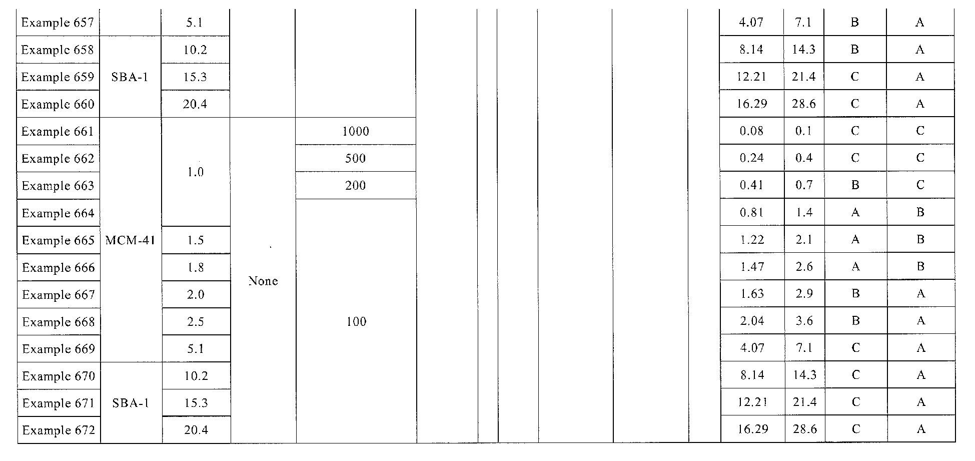

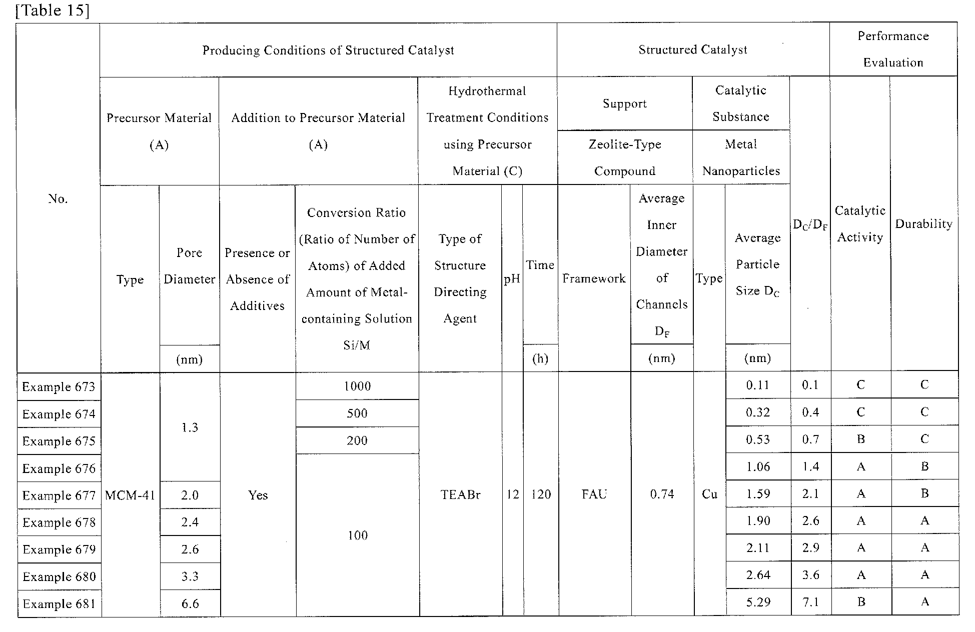

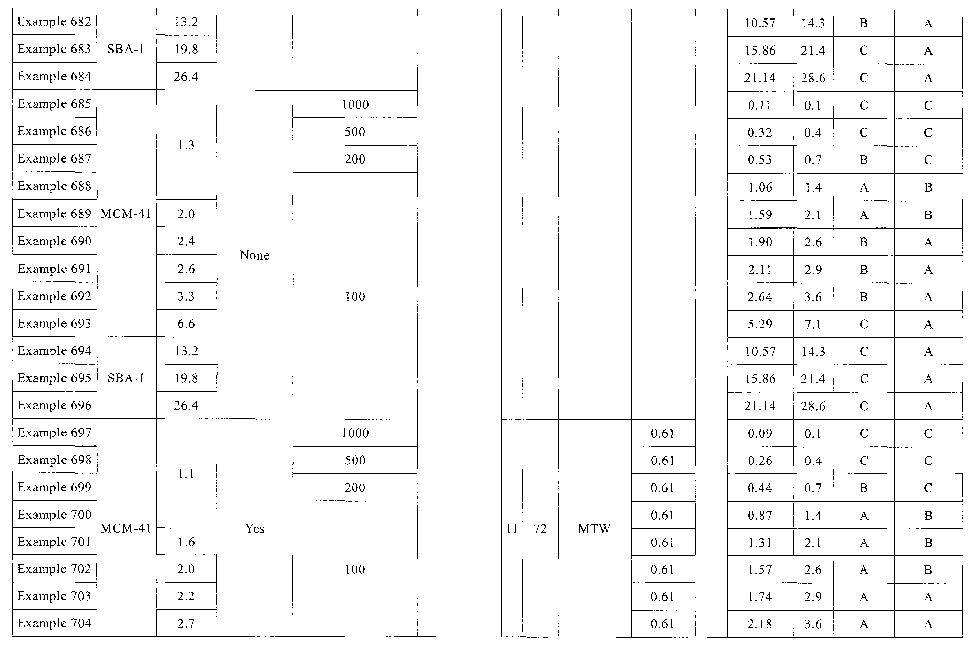

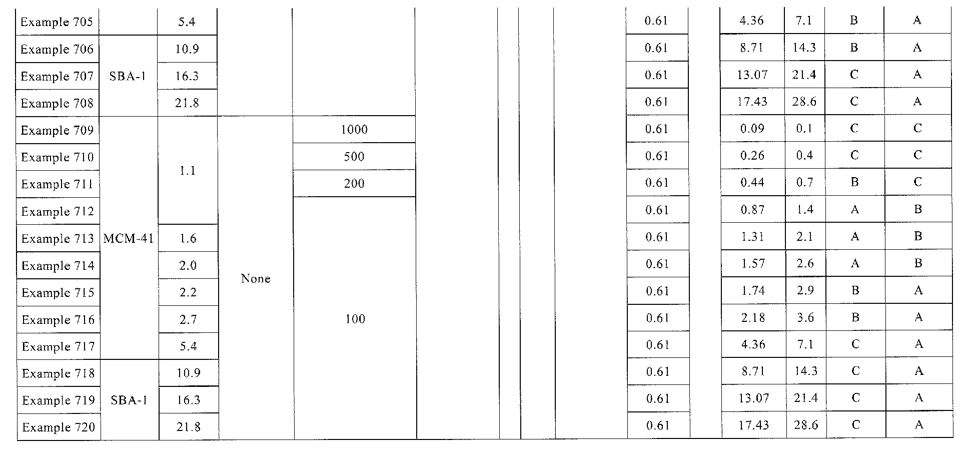

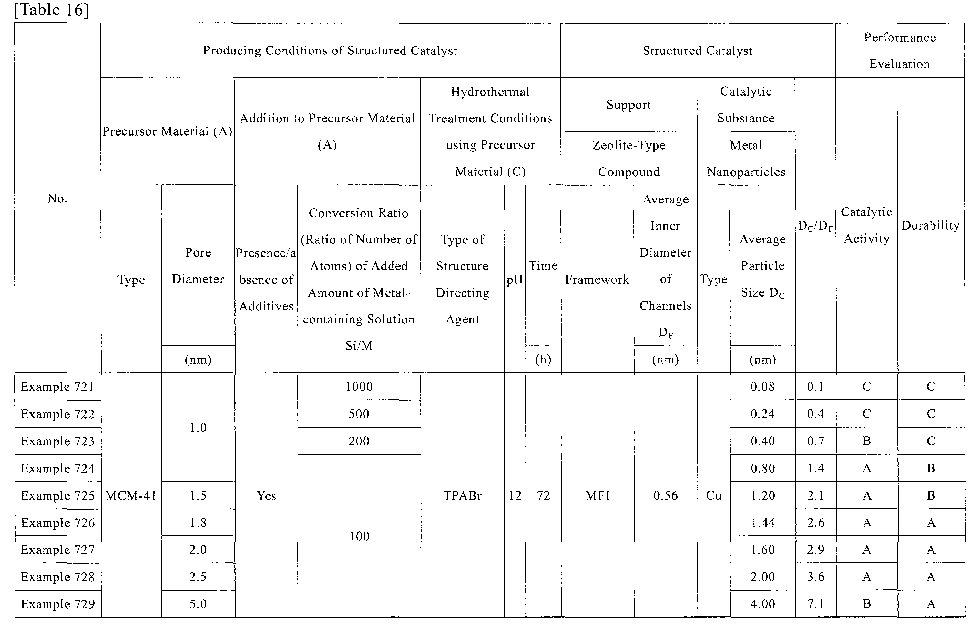

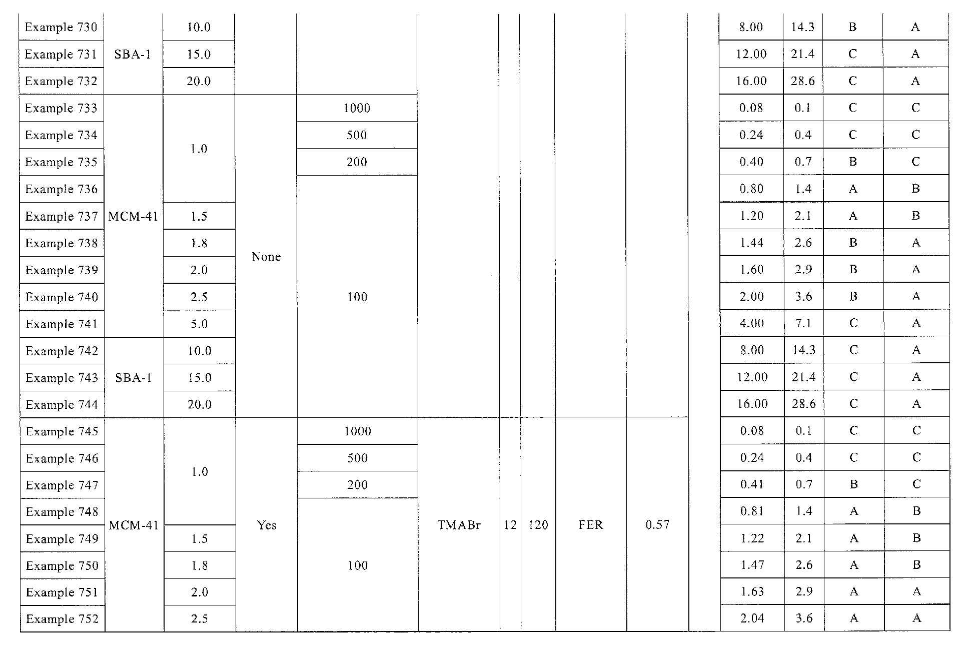

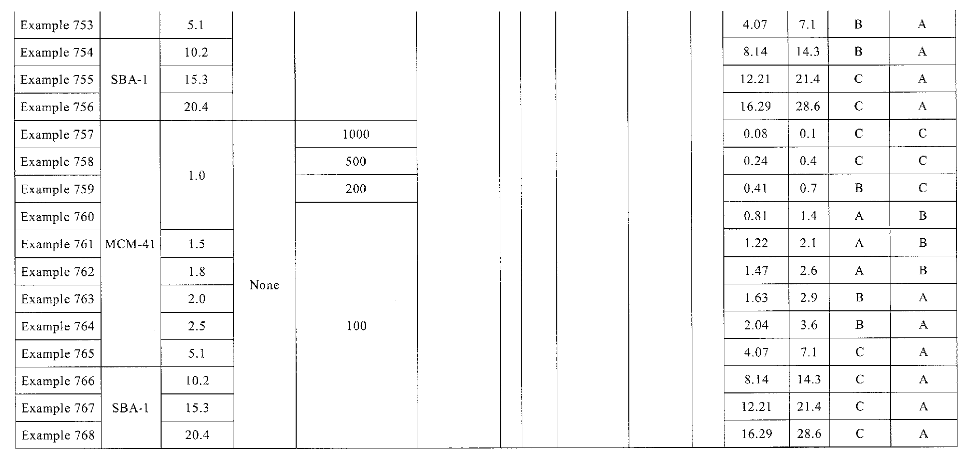

**[Table 17]**

| No. | Structured Catalyst | | | | | Performance Evaluation | | |
|---|---|---|---|---|---|---|---|---|
| | Support | | Catalytic Substance | | D_{C}/D_{F} | Catalytic Activity | Durability | Upgrading Test |
| | Zeolite-Type Compound | | Metal Oxide Nanoparticles | | | | | |
| | Framework | Average Inner Diameter of Channels D_{F} | Type | Average Particle Size D_{C} | | | | |
| | | (nm) | | (nm) | | | | |
| Example 5 | FAU | 0.74 | CoOₓ | 1.98 | 2.7 | A | B | B |
| Example 6 | | | | 2.38 | 3.2 | A | A | B |
| Example 7 | | | | 2.64 | 3.6 | A | A | B |
| Example 8 | | | | 3.30 | 4.5 | A | A | B |
| Example 31 | MTW | 0.61 | | 2.18 | 3.6 | A | A | B |
| Example 32 | | | | 2.72 | 4.5 | A | A | B |
| Example 54 | MFI | 0.56 | | 1.80 | 3.2 | A | A | B |
| Example 55 | | | | 2.00 | 3.6 | A | A | B |
| Example 56 | | | | 2.50 | 4.5 | A | A | B |
| Example 79 | FER | 0.57 | | 2.04 | 3.6 | A | A | B |
| Example 80 | | | | 2.54 | 4.5 | A | A | B |
| Example 102 | FAU | 0.74 | NiOₓ | 2.38 | 3.2 | A | A | B |
| Example 103 | | | | 2.64 | 3.6 | A | A | B |
| Example 104 | | | | 3.30 | 4.5 | A | A | B |
| Example 127 | MTW | 0.61 | | 2.18 | 3.6 | A | A | B |
| Example 128 | | | | 2.72 | 4.5 | A | A | B |
| Example 150 | MFI | 0.56 | | 1.8 | 3.2 | A | A | B |
| Example 151 | | 0.56 | | 2.0 | 3.6 | A | A | B |
| Example 152 | | 0.56 | | 2.5 | 4.5 | A | A | B |
| Example 175 | FER | 0.57 | | 2.0 | 3.6 | A | A | B |
| Example 176 | | 0.57 | | 2.5 | 4.5 | A | A | B |
| Example 198 | FAU | 0.74 | FeOₓ | 2.38 | 3.2 | A | A | C |
| Example 199 | | | | 2.64 | 3.6 | A | A | C |
| Example 200 | | | | 3.30 | 4.5 | A | A | C |
| Example 223 | MTW | 0.61 | | 2.18 | 3.6 | A | A | C |
| Example 224 | | | | 2.72 | 4.5 | A | A | C |
| Example 246 | MFI | 0.56 | | 1.80 | 3.2 | A | A | C |
| Example 247 | | 0.56 | | 2.00 | 3.6 | A | A | C |
| Example 248 | | 0.56 | | 2.50 | 4.5 | A | A | C |
| Example 271 | FER | 0.57 | | 2.04 | 3.6 | A | A | C |
| Example 272 | | 0.57 | | 2.54 | 4.5 | A | A | C |
| Example 294 | FAU | 0.74 | CuOₓ | 2.38 | 3.2 | A | A | C |
| Example 295 | | | | 2.64 | 3.6 | A | A | C |
| Example 296 | | | | 3.30 | 4.5 | A | A | C |
| Example 319 | MTW | 0.61 | | 2.18 | 3.6 | A | A | C |
| Example 320 | | | | 2.72 | 4.5 | A | A | C |
| Example 342 | MFI | 0.56 | | 1.80 | 3.2 | A | A | C |
| Example 343 | | 0.56 | | 2.00 | 3.6 | A | A | C |
| Example 344 | | 0.56 | | 2.50 | 4.5 | A | A | C |
| Example 367 | FER | 0.57 | | 2.04 | 3.6 | A | A | C |
| Example 368 | | 0.57 | | 2.54 | 4.5 | A | A | C |

As can be seen from Tables 1 to 16, the catalytic structural bodies (Examples 1 to 768), each of which was confirmed by cross-sectional observation to hold the catalytic substance in the support, were found to exhibit excellent catalytic activity in the decomposition reaction of butylbenzene and excellent durability as a catalyst compared to the silicalite in which the catalytic substance was simply adhered to the outer surface of the support (Comparative Example 1) or the skeletal body itself having no catalytic substance (Comparative Example 2).

In addition, the relationship between the amount of metal (mass%) embedded in the support of the structured catalyst measured in the evaluation [C], and the yield (mol%) of a compound having a molecular weight smaller than that of butyl benzene contained in the produced liquid was evaluated. The evaluation method was the same as the evaluation method performed in "(1) catalytic activity" in the [D] "performance evaluation" described above.

As a result, in each example, when the added amount of the metal-containing solution added to the precursor material (A), converted into the ratio of number of atoms Si/M (M = Fe), was from 50 to 200 (the content of the metal oxide nanoparticles relative to the structured catalyst being from 0.5 to 2.5 mass%), the yield of the compound having a molecular weight lower than that of butylbenzene contained in the product liquid was 32 mol% or greater, and the catalytic activity in the decomposition reaction of butylbenzene was found to be greater than or equal to the pass level.

On the other hand, in the silicalite of Comparative Example 1 in which the catalytic substance was attached only to the outer surface of the support, the catalytic activity in the decomposition reaction of butylbenzene was improved compared to the support of Comparative Example 2, which had no catalytic substance, but inferior durability as a catalyst was exhibited compared to the catalytic structural bodies of Examples 1 to 768.

In addition, the skeletal body of Comparative Example 2, which had no catalytic substance, exhibited little catalytic activity in the decomposition reaction of butylbenzene, and both the catalytic activity and durability were inferior compared to the catalytic structural bodies of Examples 1 to 384.

As is clear from Table 17, as a result of performing an upgrading test on some of the catalytic structural bodies of Examples 1 to 768, they not only exhibited excellent catalytic activity and durability but also achieved good results in the upgrading test. In this manner, the use of the structured catalyst for hydrocracking according to the present embodiment in the hydrocracking treatment in the step of upgrading of the GTL process allows the production of a liquid fuel such as naphtha, diesel, or kerosene from the synthetic oil obtained by the step of FT synthesis. Furthermore, similarly to the above, good catalytic activity and durability are confirmed.

### Other Embodiments

(1) A method for hydrocracking an FT synthetic oil or a linear hydrocarbon having from 5 to 100 carbon atoms using a catalyst, the catalyst including a support of a porous framework composed of a zeolite-type compound and at least one type of metal nanoparticles present in the support, the support having channels connecting with each other, and the metal nanoparticles including a structured catalyst held in at least an enlarged pore portion of the channels of the support.
(2) The method for hydrocracking according to (1), including adding an FT synthetic oil or a linear hydrocarbon having from 5 to 100 carbon atoms to the structured catalyst.
(3) A method for hydrocracking, including treating an FT synthetic oil or a linear hydrocarbon having from 5 to 100 carbon atoms with the hydrocracking device.

### Reference Signs List

- 1: Structured catalyst
- 10: Support
- 10a: Outer surface
- 11: Channel
- 11a: Pore
- 12: Enlarged pore portion
- 20: Catalytic substance
- 30: Catalytic substance

## Claims

1. A structured catalyst for hydrocracking, comprising:
a support of a porous framework composed of a zeolite-type compound; and
a catalytic substance present in the support,
the support comprising channels connecting with each other, and
the catalytic substance being at least one type selected from the group consisting of metal oxide nanoparticles and metal nanoparticles and being present at least in the channels of the support.

2. The structured catalyst for hydrocracking according to claim 1, wherein each of the channels comprises an enlarged pore portion, and the catalytic substance is present at least in the enlarged pore portion of the channels.

3. The structured catalyst for hydrodesulfurization according to claim 2, wherein the enlarged pore portion communicates with a plurality of pores constituting any one of a one-dimensional pore, a two-dimensional pore, and a three-dimensional pore.

4. The structured catalyst for hydrocracking according to any one of claims 1 to 3, wherein the metal oxide nanoparticles are nanoparticles composed of at least one metal oxide selected from the group consisting of cobalt oxide, nickel oxide, molybdenum oxide, tungsten oxide, and iron oxide.

5. The structured catalyst for hydrocracking according to any one of claims 1 to 3, wherein the metal nanoparticles are nanoparticles composed of at least one type of metal selected from the group consisting of platinum, palladium, rhodium, ruthenium, iridium, osmium, cobalt, nickel, molybdenum, tungsten, and iron.

6. The structured catalyst for hydrocracking according to any one of claims 1 to 5, wherein the catalytic substance comprises at least metal oxide nanoparticles, and an average particle size of the metal oxide nanoparticles is from 0.1 nm to 50 nm.

7. The structured catalyst for hydrodesulfurization according to claim 6, wherein the average particle size of the metal oxide nanoparticles is from 0.45 nm to 14.0 nm.

8. The structured catalyst for hydrocracking according to any one of claims 1 to 7, wherein the catalytic substance comprises at least metal oxide nanoparticles, and a ratio of the average particle size of the metal oxide nanoparticles to an average inner diameter of the channels is from 0.06 to 500.

9. The structured catalyst for hydrocracking according to claim 8, wherein the ratio of the average particle size of the metal oxide nanoparticles to the average inner diameter of the channels is from 0.1 to 45.

10. The structured catalyst for hydrocracking according to claim 8 or 9, wherein the ratio of the average particle size of the metal oxide nanoparticles to the average inner diameter of the channels is from 1.7 to 4.5.

11. The structured catalyst for hydrodesulfurization according to any one of claims 6 to 9, wherein a metal element (M) of the metal oxide nanoparticles is contained in an amount of from 0.5 to 2.5 mass% relative to the structured catalyst.

12. The structured catalyst for hydrocracking according to any one of claims 1 to 12, wherein the catalytic substance comprises at least metal nanoparticles, and the average particle size of the metal nanoparticles is from 0.08 nm to 30 nm.

13. The structured catalyst for hydrodesulfurization according to claim 12, wherein the average particle size of the metal nanoparticles is from 0.35 nm to 11.0 nm.

14. The structured catalyst for hydrocracking according to any one of claims 1 to 13, wherein the catalytic substance includes at least metal nanoparticles, and the ratio of the average particle size of the metal nanoparticles to the average inner diameter of the channels is from 0.05 to 300.

15. The structured catalyst for hydrocracking according to claim 14, wherein the ratio of the average particle size of the metal nanoparticles to the average inner diameter of the channels is from 0.1 to 30.

16. The structured catalyst for hydrocracking according to claim 14 or 15, wherein the ratio of the average particle size of the metal nanoparticles to the average inner diameter of the channels is from 1.4 to 3.6.

17. The structured catalyst for hydrodesulfurization according to any one of claims 12 to 16, wherein a metal element (M) of the metal nanoparticles is contained in an amount of from 0.5 to 2.5 mass% relative to the structured catalyst.

18. The structured catalyst for hydrocracking according to any one of claims 2 to 17, wherein an average particle size of the catalytic substance is greater than the average inner diameter of the channels and is less than or equal to an inner diameter of the enlarged pore portion.

19. The structured catalyst for hydrocracking according to any one of claims 1 to 18, wherein
each of the channels comprises any one of the one-dimensional pore, the two-dimensional pore, and the three-dimensional pore defined by a framework of the zeolite-type compound and the enlarged pore portion that is different from any one of the one-dimensional pore, the two-dimensional pore, and the three-dimensional pore,
the average inner diameter of the channels is from 0.1 nm to 1.5 nm, and
the inner diameter of the enlarged pore portion is from 0.5 nm to 50 nm.

20. The structured catalyst for hydrocracking according to any one of claims 1 to 19, wherein the catalytic substance is further held on an outer surface of the support.

21. The structured catalyst for hydrocracking according to claim 20, wherein a content of the catalytic substance present in the support is greater than a content of the catalytic substance held on the outer surface of the support.

22. The structured catalyst for hydrocracking according to any one of claims 1 to 21, wherein the zeolite-type compound is a silicate compound.

23. A hydrocracking device comprising the structured catalyst for hydrocracking described in any one of claims 1 to 22.

24. A method for producing a structured catalyst for hydrodesulfurization, comprising:
a step of calcination of calcinating a precursor material (B) obtained by impregnating a precursor material (A), for obtaining a support of a porous framework composed of a zeolite-type compound, with a metal-containing solution; and
a step of hydrothermal treatment of hydrothermal-treating a precursor material (C) obtained by sintering the precursor material (B).

25. The method for producing a structured catalyst for hydrodesulfurization according to claim 24, comprising a step of reduction treatment of the hydrothermal-treated precursor material (C).

26. The method for producing a structured catalyst for hydrodesulfurization according to claim 24 or 25, wherein from 50 to 500 mass% of a non-ionic surfactant is added to the precursor material (A) before the step of calcination.

27. The method for producing a structured catalyst for hydrodesulfurization according to any one of claims 24 to 26, wherein the precursor material (A) is impregnated with the metal-containing solution by adding the metal-containing solution to the precursor material (A) in multiple portions before the step of calcination.

28. The method for producing a structured catalyst for hydrodesulfurization according to any one of claims 24 to 27, wherein in impregnating the precursor material (A) with the metal-containing solution before the step of calcination, an added amount of the metal-containing solution added to the precursor material (A), converted into a ratio of silicon (Si) constituting the precursor material (A) to a metal element (M) included in the metal-containing solution added to the precursor material (A), a ratio of number of atoms Si/M, is adjusted to from 10 to 1000.

29. The method for producing a structured catalyst for hydrodesulfurization according to claim 24 or 25, wherein in the step of hydrothermal treatment, the precursor material (C) and a structure directing agent are mixed.

30. The method for producing a structured catalyst for hydrodesulfurization according to claim 24 or 25, wherein the step of hydrothermal treatment is performed in basic condition.
